(19) Europäisches Patentamt
European Patent Office
Office européen des brevets

(11) EP 4 466 322 B1

(12) EUROPEAN PATENT SPECIFICATION

(45) Date of publication and mention of the grant of the patent:
**24.09.2025 Bulletin 2025/39**

(21) Application number: **23702371.8**

(22) Date of filing: **12.01.2023**

(51) International Patent Classification (IPC):
***C09J 167/04*** *(2006.01)*

(52) Cooperative Patent Classification (CPC):
(C-Sets available)
**C09J 167/04; C08G 63/08;** C08G 2170/20 (Cont.)

(86) International application number:
**PCT/FI2023/050030**

(87) International publication number:
**WO 2023/135368 (20.07.2023 Gazette 2023/29)**

# (54) HOT MELT ADHESIVE, METHOD FOR THE PREPARATION AND USES THEREOF

SCHMELZKLEBSTOFF, VERFAHREN ZU SEINER HERSTELLUNG UND VERWENDUNGEN DAVON

ADHÉSIF THERMOFUSIBLE, PROCÉDÉ DE PRÉPARATION ET UTILISATIONS DE CELUI-CI

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **17.01.2022 FI 20225036**

(43) Date of publication of application:
**27.11.2024 Bulletin 2024/48**

(73) Proprietor: **Kiilto Oy**
**33880 Lempäälä (FI)**

(72) Inventors:
- **LAHTI, Tuula**
  **33101 Tampere (FI)**
- **KULLA-PELLONEN, Maija**
  **33101 Tampere (FI)**
- **JYRÄKOSKI, Satu**
  **33101 Tampere (FI)**

(74) Representative: **Laine IP Oy**
**Porkkalankatu 24**
**00180 Helsinki (FI)**

(56) References cited:
**US-A1- 2017 081 572**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 167/04, C08L 29/04**

## Description

### TECHNICAL FIELD

The present invention relates to a hot melt adhesive, a method for the preparation and uses thereof. More particularly, the present invention relates to biodegradable hot melt adhesives comprising a copolymer comprising a repeating unit of formula (Ia); a repeating unit of formula (Ib); and one or more first $C_{2-10}$-hydrocarbons each independently substituted with 2-6 substituents each independently selected from O and OH, provided that at least one of the substituents is O, wherein each O of the at least one O substituents is independently covalently attached to a repeating unit of formula (Ia) or a repeating unit of formula (Ib); and polyvinyl alcohol (PVA) .

### BACKGROUND

Hot melt adhesives (HMAs) are solid at room temperature and become liquid when heated above their softening point. At temperatures of and above the softening point, the HMAs can be applied to the substrates that need to be attached together. After the application of the HMAs in molten stage, the HMAs wet the surface of the substrates and glue the compressed substrates together during the solidification of the HMAs.

Traditionally, HMAs are based on petrochemical raw materials. Typically, three main components are used to formulate the HMAs, namely base polymer, tackifier, and wax. In addition, typically additives like antioxidants, UV stabilizers, and plasticizers are used in small amounts.

Tackifiers are chemical compounds used in adhesives to increase the adhesion of the adhesives.

Waxes are typically used to reduce viscosity, to alter the setting speed, and to reduce the cost of HMAs.

Plasticizers are chemical compounds that conventionally are added to a material to make it softer and more flexible, to increase its plasticity, to decrease its viscosity, or to decrease friction during its handling in manufacture.

HMAs are used in different industries for wide range of applications. One of the major users is the packaging industry, manufacturing of packaging from paper, cardboard, and corrugated boards but they are also used in hygiene and nonwoven industry manufacturing disposable products such as diapers. In printing industry conventional HMAs are used for bonding the spines of books and the wood processing industry uses them for veneer surroundings and edging.

It is well known that many conventional HMAs and polymers comprised therein are not biodegradable. However, polymers and HMAs may degrade via photooxidation, nevertheless, the formed products often persist in landfills and harm the environment.

Today both consumers and companies are more concerned about the environmental impact of packaging and its contents. Awareness of the raw materials used in packaging has increased, and environmentally responsible packaging now brings a competitive advantage.

Biodegradable polymers are well known in the art. Examples of biodegradable homopolymers are poly-3-hydroxybutyrate (PHB), polycaprolactone (PCL), and polylactic acid (PLA).

Patent EP3214106B1 discloses a hot-melt adhesive of a block polymer, comprising a first block and a second block, wherein the first block is an amorphous copolymer of lactic acid and a further polymerisable monomer and the second block is a polylactic acid polymer selected from poly-L-lactic acid (PLLA) and poly-D-lactic acid (PDLA), the first block having a number average molecular weight of at least 0.5 kg/mol and the second block having a number average molecular weight of at least 1 kg/mol. US 2017/081572 A1 relates to a non-reactive hot melt adhesive containing a copolymer being substantially composed of a reaction product of lactide (L) and caprolactone (C).

Good HMAs need to have, in addition to favorable adhesion, also other properties such as favorable setting time, and open time. Therefore, several properties need to be considered while formulating HMAs.

The time between applying the adhesive and bringing the other material (substrate) in contact is called open time.

Setting time is the time required to form sufficient bond strength. HMAs set by loss of heat and because of that they may have faster setting times than other adhesives. Other features of good HMAs are good wet tack and adhesion to porous and permeable substrates but also to nonporous substrates. They are also thermally detachable.

The biodegradability of products may be determined with various methods and preferably need to fill the requirement of the ISO 14855 standard, which means that the product biodegrade under controlled composting conditions, such as under aerobic conditions, at certain temperature and humidity.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

One of the problems associated with known HMAs is that they are not biodegradable. It is therefore an object of

the present disclosure to provide HMAs that are biodegradable.

A hot melt adhesive is disclosed, the hot melt adhesive comprising:

- a copolymer comprising

  a repeating unit of formula (Ia)

  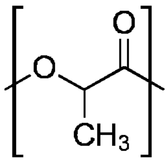
  (Ia) ;

  a repeating unit of formula (Ib)

  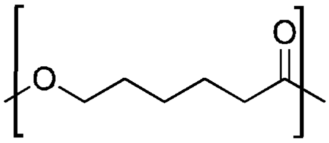
  (Ib) ;

  and

  one or more first $C_{2-10}$-hydrocarbons each independently substituted with 2-6 substituents each independently selected from O and OH, provided that at least one of the substituents is O, wherein each O of the at least one O substituents is independently covalently attached to a repeating unit of formula (Ia) or a repeating unit of formula (Ib); and

- polyvinyl alcohol (PVA).

The invention is based on the realization that a separate tackifier is not needed in the hot melt adhesive as disclosed herein and hereafter for the HMA to have favorable adhesion. Therefore, it is to be understood that the copolymer and PVA comprised in the HMA contribute to the favorable adhesion properties of the HMA, and the HMAs as disclosed herein may be free of an additional adhesion-promoting agent, such as a tackifier.

The invention is also based on the realization that a HMA comprising a copolymer as disclosed herein and hereafter is advantageous, since the HMA comprising a copolymer as disclosed herein and hereafter exhibit properties such as biodegradability, and favorable adhesion, setting time, and open time. In addition, HMAs as disclosed herein and hereafter have properties such as, but not limited to, favorable softening point, flexibility, and shear adhesion failure temperature.

The present disclosure also provides a method for the preparation of a hot melt adhesive as disclosed herein and hereafter, comprising:

i) providing a copolymerization composition comprising lactide (LA), ε-caprolactone (CL), one or more first $C_{2-10}$-hydrocarbons each independently substituted with 2-6 substituents each independently selected from OH, and a catalyst;
ii) polymerizing the copolymerization composition to form a first composition comprising a copolymer;
iii) combining polyvinyl alcohol (PVA) with the first composition comprising the copolymer to form a second composition; and
iv) heating the formed second composition to form a third composition,

to form the hot melt adhesive.

The present disclosure also provides an item comprising a hot melt adhesive as disclosed herein and hereafter.

The present disclosure also provides uses of a hot melt adhesive as disclosed herein and hereafter to bond substrates together.

The present disclosure also provides uses of a hot melt adhesive as disclosed herein and for preparing packaging, laminating applications, nonwoven applications, disposable products, hygiene products, PLA film, forming cardboard products, binding, coating paper, cardboard, or plastics, preparing cardboard, and closures.

The objects of the invention are achieved by hot melt adhesives, and methods for the preparation thereof, and

uses thereof that are characterized by what is stated in the independent claims. The preferred embodiments of the invention are disclosed in the dependent claims.

**DETAILED DESCRIPTION**

"Optional" or "optionally" denotes that the subsequently described event or circumstance may but need not occur, and that the description includes instances where the event or circumstance occurs and instances in which it does not. "Comprises" or "comprising" denotes that the subsequently described feature(s) or act(s) may but need not include other feature(s) or act(s). It will further be understood that reference to 'an' item refers to one or more of those items.

The term "biodegradable" and "biodegradability" as used herein and hereafter refers to the breakdown of organic matter, such as chemical compounds and HMAs, by microorganisms. Biodegradability of HMAs may be determined according to the ISO 14855 standard.

The terms "hot melt adhesives" (HMAs) as used herein and hereafter refer to chemical compounds and compositions that are adhesives and may be solid at room temperature (21 °C) and become liquid when heated above their softening point. At temperatures of and above the softening point, the HMAs can be applied to substrates (materials) that are intended to be attached together. The substrates may be the same or different. After the application of the HMAs in molten phase (i.e., the HMA being liquid) to the substrate(s), the HMAs wet the surface of the substrate(s) and bond the compressed substrate(s) together during the solidification of the HMA. Covalent chemical bonds may or may not form, typically do not essentially form, between the adhesive and the substrate(s) upon which the adhesive is applied. Typically, the HMA may be referred to as a non-reactive HMA. It is to be understood that a second composition, a third composition, and a fourth composition as disclosed herein and hereafter may be a hot melt adhesive, in addition to the hot melt adhesives as disclosed herein and hereafter.

The term "adhesion" as used herein and hereafter refers to the tendency of hot melt adhesives to cling to substrates and materials. A shear adhesion failure temperature of 35 °C or more, for example 35 °C, 40 °C, 45 °C, 48 °C, 50 °C, 52 °C, 55 °C, 60 °C, 65 °C, 70 °C, is considered an acceptable/favourable/good adhesion of the HMA.

The terms "softening point" as used herein and hereafter refer to the temperature at which solid materials, chemical compounds, compositions and HMAs become liquid or at least softens beyond some arbitrary softness. 65 °C or more, for example 65 °C, 68 °C, 70 °C, 75 °C, 77 °C, 78 °C, 79 °C, 80 °C, 81 °C, 82 °C, 83 °C, 85 °C, is considered an acceptable/favourable/good temperature of the softening point. The softening point may be determined with methods and apparatus known in the art.

The terms "bond strength" as used herein and hereafter refer to the cohesive strength of the adhesive, i.e., the internal strength of the adhesive as a result of a variety of interactions (cohesive forces) within the adhesive, such as, but not limited to, due to chemical bonds within the adhesive, and intermolecular interactions between the copolymer and/or PVA and/or plasticizer.

The term "polymer" as used herein and hereafter refers to natural and/or synthetic linear or two- or three-dimensional homopolymers and copolymers that can be unbranched or branched polymers, such as, but not limited to, star polymers, comb polymers, brush polymers, dendronized polymers, ladder polymers, and dendrimers. Polymers which contain only a single type of repeating unit are referred as homopolymers, while polymers containing two or more types of repeating units are referred as copolymers.

The term "copolymer" as used herein and hereafter refers to polymers derived from more than one species of monomer. Copolymers include, but are not limited to, alternating copolymers, periodic copolymers, statistical copolymers, random copolymers, block copolymers, and graft copolymers.

The term "monomer" as used herein and hereafter refers to a molecule that can undergo polymerization thereby contributing repeating units to the essential structure of a polymer. The monomers are used to form the one or more repeating units of the polymer. Monomers include, but are not limited to, lactones, in particular cyclic lactones, carbonates, esters, lactams, alkenes, and epoxides. Examples of preferred monomers include, but are not limited to, lactide (LA), (*R,R*)-lactide (D-lactide, CAS: 25038-75-9), (*S,S*)-lactide (L-lactide, CAS: 4511-42-6), *meso*-lactide ((*R,S*)-lactide, CAS: 13076-19-2), and ε-caprolactone (CL).

The term "repeating unit" as used herein and hereafter refers to a part of the main chain (backbone) of a polymer that is connected on at least two ends to the polymer chain. I.e., the repeating unit is a part of a polymer whose repetition would produce the complete polymer chain (except for the end-groups) by linking the repeat units together successively along the chain. Furthermore, a repeating unit is a basic structural unit of a polymer, said repeating unit corresponds to a monomer unit, which has been polymerized to produce a polymer.

The term "hydrocarbons" as used herein and hereafter refers to saturated or unsaturated aliphatic linear, branched or cyclic, in particular linear and branched, organic compounds consisting entirely of hydrogen and carbon and having the indicated number of carbon atoms.

The term "$C_{2-10}$-hydrocarbons" as used herein and hereafter refers to hydrocarbons consisting entirely of hydrogen and suitably 2 to 10 carbon atoms, and any position isomers and stereoisomers thereof. Therefore, examples of

first $C_{2-10}$-hydrocarbons include, but are not limited to, ethane, propane, *n*-butane, *i*-butane, *n*-pentane, iso-pentane, neopentane, *n*-hexane, 2-metylpentane, 3-methylpentane, 2,3-dimethylbutane, 2,2-dimethylbutane, *n*-heptane, 2-methylhexane, 3-methylhexane, 2,2-dimethylpentane, 2,3-dimethylpentane, 2,4-dimethylpentane, 3,3-dimethylpentane, 3-ethylpentane, 2,2,3-trimethylbutane, 2-methylheptane, octane, nonane, decane, undecane, dodecane, and any position isomers and stereoisomers thereof. Similarly, the term "$C_{1-10}$-hydrocarbons" as used herein and hereafter refers to hydrocarbons consisting entirely of hydrogen and suitably 1 to 10 carbon atoms, and any position isomers and stereoisomers thereof. Examples of second $C_{1-10}$-hydrocarbons include, but are not limited to, methane, ethane, propane, butane, pentane, heptane, 2-methylheptane, and *n*-octane, and any position isomers and stereoisomers thereof.

The term "substituted" as used herein and hereafter refers to a organic compound, in particular a hydrocarbon, wherein one or more hydrogens of the organic compound are replaced by a substituent.

The term "substituent" as used herein and hereafter refers to one atom or a group of atoms that replaces (one or more) hydrogen atoms on the parent chain of an organic compound, in particular a hydrocarbon, thereby becoming a moiety in the resultant (new) molecule. It is to be understood that the resultant (new) molecule may be neutral, an ion, or a radical. Examples of substituents include, but are not limited to, O, OH, and ethers thereof; halogen, $CO_2H$ and esters thereof; $C_{1-4}$-alkyl, in particular methyl, ethyl, propyl; $NO_2$, $N_3$, NOH, and ethers thereof; CN, NH, $NH_2$, and amides thereof; S, SH, and thioethers thereof; $C_{2-10}$-alkynyl, $C_{1-4}$-haloalkyl, $C_{1-4}$-alkoxy, in particular methoxy; and acetoxy.

Examples of first $C_{2-10}$-hydrocarbons substituted with 2-6 substituents each independently selected from O and OH, provided that at least one of the substituents is O, include, but are not limited to, 3-hydroxy-2,2-dimethylpropoxyl, 2,2-dimethyl-3-oxylpropoxyl, 2,3-dihydroxypropoxyl, 2-hydroxy-1-(hydroxymethyl)ethoxyl, 2-hydroxy-3-oxylpropoxyl, 3-hydroxy-2-oxylpropoxyl, 2,3-dioxylpropoxyl, 3-hydroxy-2,2-bis(hydroxymethyl)propoxyl, 2,2-bis(hydroxymethyl)-3-oxylpropoxyl, 2-(hydroxymethyl)-3-oxyl-2-(oxylmethyl)propoxyl, 3-oxyl-2,2-bis(oxylmethyl)propoxyl, 2,3,4,5,6-pentahydroxyhexyloxyl, 2,3,4,5,6-pentahydroxyhexyloxyl, 2,3,4,5-tetrahydroxy-6-oxylhexyloxyl, 3,4,5,6-tetrahydroxy-2-oxylhexyloxyl, 2,4,5,6-tetrahydroxy-3-oxylhexyloxyl, 2,3,5,6-tetrahydroxy-4-oxylhexyloxyl, 2,3,4,6-tetrahydroxy-5-oxylhexyloxyl, 4,5,6-trihydroxy-2,3-dioxylhexyloxyl, 3,5,6-trihydroxy-2,4-dioxylhexyloxyl, 2,3,4-trihydroxy-5,6-dioxylhexyloxyl, 2,3-dihydroxy-4,5,6-trioxylhexyloxyl, 2-hydroxy-3,4,5,6-tetraoxylhexyloxyl, 2,3,4,5,6-pentaoxylhexyloxyl, 2,3,4,5-tetrahydroxypentyloxyl, 2,3,4-trihydroxy-5-oxylpentyloxyl, 3,4,5-trihydroxy-2-oxylpentyloxyl, 2,3-dihydroxy-4,5-dioxylpentyloxyl, 2,4-dihydroxy-3,5-dioxylpentyloxyl, and 2-hydroxy-3,4,5-trioxylpentyloxyl, 2-oxylpropoxyl, 3-oxylbutoxyl, and any position isomers and stereoisomers thereof. Examples of first $C_{2-10}$-hydrocarbons each independently substituted with 2-6 substituents each independently selected from OH include, but are not limited to, pentaerythritol, glycerol, neopentyl glycol, xylitol, D-sorbitol, 1,3-butanediol, and 1,2-propanediol, and position isomers and stereoisomers thereof. It is to be understood that first $C_{2-10}$-hydrocarbons substituted with 2-6 substituents each independently selected from O and OH, provided that at least one of the substituents is O, may be derived from first $C_{2-10}$-hydrocarbons each independently substituted with 2-6 substituents each independently selected from OH.

Examples of second $C_{1-10}$-hydrocarbons substituted with 1 substituent selected from O include, but are not limited to, $C_{1-10}$-alkoxy, such as methoxy, ethoxy, heptyloxy, 1-propylpentyloxyl, 2-ethylhexyloxyl, and n-octyloxy, and any position isomers and stereoisomers thereof. Examples of second $C_{1-10}$-hydrocarbons each independently substituted with 1 substituent selected from OH include, but are not limited to, methanol, ethanol, heptanol, 2-ethyl-1-hexanol, and 1-octanol, and any position isomers and stereoisomers thereof. It is to be understood that second $C_{1-10}$-hydrocarbons substituted with 1 substituent selected from O may be derived from second $C_{1-10}$-hydrocarbons each independently substituted with 1 substituent each independently selected from OH.

The terms "O is independently covalently attached to a repeating unit of formula (Ia) or a repeating unit of formula (Ib)" as used herein and hereafter refers to a oxygen (without a hydrogen covalently attached to it) of a hydrocarbon, wherein the O being covalently attached to a repeating unit of formula (Ia) or a repeating unit of formula (Ib). In particular, the one or more O of a hydrocarbon that are covalently attached to a repeating unit of formula (Ia) or a repeating unit of formula (Ib) may form end groups of polymers, in particular copolymers, or may form constitutional units of polymers, in particular copolymers. It is to be understood that if a hydrocarbon comprises e.g. two O, e.g. both O may be covalently attached to repeating units of formula (Ia), or both O may be covalently attached to repeating units of formula (Ib), or one of the O may be covalently attached to a repeating unit of formula (Ia) and the other O may be covalently attached to a repeating unit of formula (Ib).

The terms "end group" as used herein and hereafter refers to functionalities and constitutional units that are at the extremity of polymers, in particular copolymers.

The terms "constitutional units" as used herein and hereafter refers to a group of atoms comprising a part of the essential structure of polymers, in particular copolymers. Constitutional units may be covalently attached between repeating units of formula (Ia), repeating units of formula (Ib), or any combination of repeating units of formulas (Ia) and (Ib). Constitutional units covalently attached at the extremity of polymers are referred herein and hereafter to end groups.

The terms "polyvinyl alcohol" and "PVA" as used herein and hereafter refers to a polymer comprising at least 26 wt%, at least 30 wt%, at least 33 w%, at least 50 wt%, at least 80 wt%, at least 90 wt%, at least 95 wt%, at least 99 wt%, or 99 wt% of a repeating unit with formula [$CH_2CH(OH)$]. The PVA may be fully or partially hydrolyzed, i.e., the PVA may originate

from polyvinyl acetate that has fully or partially been hydrolysed. Examples of degree of hydrolysis of the PVA include, but are not limited to, 26-99 mol%, 26 - 53 mol%, 30-99 mol%, 33-98 mol%, 33-90 mol%, 33-80 mol%, 33-70 mol%, or 33-53 mol%. The PVA may include carboxylic acid functional groups. Examples of PVAs include, but are not limited to, polyvinyl alcohol (CAS: 25213-24-5), and PVA LM-20, PVA LM-30, and PVA LM-22 (from Kuraray Poval).

The term "plasticizer" as used herein and hereafter refers to chemical compounds that are typically added to polymers and materials to make them softer, more flexible, to increase their plasticity, to decrease their viscosity, and/or to decrease friction during their handling in the preparation thereof. Examples of plasticizers include, but are not limited to, polymeric plasticizers, biodegradable plasticizers, polyester of adipic acid with 1,3-butanediol, 1,2-propanediol and 2-ethyl-1-hexanol (Glyplast 206/5 NL, CAS: 73018-26-5, alternative names include polydi(2-ethylhexyl)glycoladipate, and hexanedioic acid, polymer with 1,3-butanediol and 1,2-propanediol, 2-ethylhexyl ester), di-n-heptyl succinate, polyester polyols, such as lactic acid polyesters (such as Glyplast OLA 2 from Condensia), isosorbide diesters, and tributyl o-acetylcitrate.

The term "$C_{2-10}$-diacid" as used herein and hereafter refers to dicarboxylic acids (i.e., having two carboxyl groups) with 2-10 carbon atoms. Examples of $C_{2-10}$-diacids include, but are not limited to, oxalic acid, malonic acid, succinic acid, glutaric acid, adipic acid, and pimelic acid.

The term "$C_{2-6}$-polyols" as used herein and hereafter refers to organic compounds with 2-6 carbon atoms and containing two or more hydroxyl groups. Examples of $C_{2-6}$-polyols include, but are not limited to, ethylene glycol, 1,2-, and 1-3-propanediol, 1,2-, 1,3-, and 1,4-butanediol, pentaerythritol, glycerol, neopentyl glycol, xylitol, and D-sorbitol.

The term "$C_{2-6}$-diols" as used herein and hereafter refers to $C_{2-6}$-polyols with 2-6 carbon atoms and containing two hydroxyl groups. Examples of $C_{2-6}$-polyols include, but are not limited to, ethylene glycol, 1,2-, and 1-3-propanediol, 1,2-, 1,3-, and 1,4-butanediol.

The term "$C_{2-10}$-alcohols" as used herein and hereafter refers to organic compounds with 2-10 carbon atoms and containing one hydroxyl group. Examples of $C_{2-10}$-alcohols include, but are not limited to, ethanol, propanol, heptanol, 1-hexanol, and 2-ethyl-1-hexanol.

The term "tackifier" as used herein and hereafter refers to chemical compounds that may be used in conventional adhesives to increase the adhesion (tack), i.e., the stickiness of the surface, of the adhesive. Examples of tackifiers include, but are not limited to, resins, hydrogenated hydrocarbon resins, and their mixtures, terpene-phenol resins, and novolacs.

The term "antioxidant" as used herein and hereafter refers to chemical compounds that inhibit or reduces oxidation of polymers, in particular copolymers, adhesives, plasticizers, and chemical compounds. Examples of antioxidants include, but are not limited to, pentaerythritol tetrakis[3-[3,5-di-tert-butyl-4-hydroxyphenyl]propionate, 2',3-bis [[3-[3,5-di-tert-butyl-4-hydroxyphenyl]propionyl]]propionohydrazide, bis (2,4-di-t-butylphenyl)pentaerythritol diphosphite, and tetrakis(methylene-3-(3,5-di-tert-butyl-4-hydroxyphenyl-propionate))methane.

The terms "degree of hydrolysis" as used herein and hereafter refers to the proportion of cleaved bonds, in particular ester bonds, of a chemical compound such as, but not limited to, polymers such as polyesters, PVA, and polyvinyl acetate. Degree of hydrolysis is typically expressed in mol%. Typically, the degree of hydrolysis of PVA refers to repeating units [$CH_2CH(OH)$] (in moles) of PVA divided by the sum of repeating units [$CH_2CH(OH)$] and [$CH_2CH(OAc)$] (in moles) comprised in the PVA times a denominator of 100, wherein repeating units [$CH_2CH(OAc)$] have been hydrolyzed to repeating units [$CH_2CH(OH)$].

The term "viscosity" as used herein and hereafter refers to resistance to deformation of chemical compounds, polymers, in particular copolymers, and HMAs at a given rate. Viscosity may be expressed in centipoise (cP) or millipascal second (mPa·s).

The terms "molecular weight" (Mw) as used herein and hereafter refers to the molecular mass and is expressed in g/mol. "Molecular weight" may also refer to the number average molecular weight (also called the number average molar mass, Mn), which is the average of the molecular masses of the individual macromolecules, in particular polymers and adhesives.

The terms "setting time" as used herein and hereafter refers to the time from application of the adhesive to the load-bearing mechanical strength of the adhesive bond, i.e., the time it takes to form an acceptable bond when two or more substrates or materials, being the same or different, are combined with an adhesive. HMAs may set by loss of heat and because of that they may have fast setting times. 0.1-10 s is considered a fast/favourable/acceptable/good setting time. Examples of setting times include, but are not limited to, a setting time of 0.1-10 s, in particular 0.5-6 s, more in particular 0.5-5 s or 1.0-5 s, even more in particular 0.5-4.0 s, even more in particular 1.0-3.5 s.

The terms "open time" as used herein and hereafter refers to the time after adhesive has been applied to the substrate or material to be bonded during which it retains its ability to adhere to and bond material or substrate to be bonded. 0.5-10 s is considered an acceptable/favourable/good open time. Examples of open times include, but are not limited to, an open time of 0.5-10 s, 1-10 s, 1-8 s, in particular 2-10 s, more in particular 3-10 s, about 2-3 s, about 3-4 s, about 4-5 s, about 5-6 s, and about 6-7 s.

The terms "glass transition temperature" (Tg) as used herein and hereafter refers to the temperature at which

glass transition occurs. Glass transition refers to transitions from a hard, glassy material to a soft, rubbery material. Examples of glass transition temperatures include, but are not limited to, a glass transition temperature of 20-80 °C, in particular 25-60 °C, more in particular 28-45 °C.

The term "gelling" as used herein and hereafter refers to the viscosity of adhesive increase to form a gel.

The terms "shear adhesion failure temperature" as used herein and hereafter refers to heat-fail temperature in shear of hot-melt adhesives.

Skilled persons in the art possess the knowledge and skill in the art to enable them to select suitable methods to measure for example viscosity, setting time, open time, glass transition temperature, gelling, and shear adhesion failure temperature.

The term "wt%" as used herein and hereafter refers to percentage by mass, i.e. the mass fraction ($w_i$) of the mass ($m_i$) to the total mass ($m_{tot}$) times a denominator of 100, i.e. the formula

$$wt\% = w_i * 100 = (m_i/m_{tot}) * 100,$$

wherein $w_i$ = mass fraction of repeating unit, or compound to which wt% refers to, $m_i$ = mass of repeating unit, or compound to which wt% refers to, and $m_{tot}$ = the total mass of e.g. starting material, product, HMA, or composition, or to what it refers to. It is to be understood that the proportion (wt%) of each repeating unit or compound in any of the copolymerization compositions, the first compositions, the second compositions, the third compositions, the fourth compositions, and the hot melt adhesives as disclosed herein and herefater may be selected so that they add up to 100 wt%. For example, a HMA comprising a copolymer comprising a repeating unit of formula (Ia), a repeating unit of formula (Ib), one first substituted $C_{2-10}$-hydrocarbon, and one second substituted $C_{2-10}$-hydrocarbon; PVA; and a plasticizer, wherein the adhesive comprises 60-90 wt% of the repeating unit of formula (Ia), 1-30 wt% of the repeating unit of formula (Ib), 0.1-1.5 wt% of the one first substituted $C_{2-10}$-hydrocarbons, 0-1.5 wt% of the one second substituted $C_{1-10}$-hydrocarbon, 1-10 wt% of the PVA, and 0.5-10 wt% of the plasticizer, based on the total weight of the adhesive, may include, but not limited to, HMAs comprising 73 wt% of the repeating unit of formula (Ia), 15 wt% of the repeating unit of formula (Ib), 1 wt% of the one first substituted $C_{2-10}$-hydrocarbon, 0.5 wt% of the one second substituted $C_{2-10}$-hydrocarbon, 5 wt% of the PVA, and 5.5 wt% of the plasticizer, based on the total weight of the adhesive; HMAs comprising 70-80 wt% (e.g. 75 wt%) of the repeating unit of formula (Ia), 8-18 wt% (e.g. 13 wt%) of the repeating unit of formula (Ib), 0.5 wt% of the one first substituted $C_{2-10}$-hydrocarbon, 0.5 wt% of the one second substituted $C_{2-10}$-hydrocarbon, 5 wt% of the PVA, and 6 wt% of the plasticizer, based on the total weight of the adhesive; and HMAs comprising 75 wt% of the repeating unit of formula (Ia), 12 wt% of the repeating unit of formula (Ib), 0.45 wt% of the one first substituted $C_{2-10}$-hydrocarbon, 0.45 wt% of the one second substituted $C_{2-10}$-hydrocarbon, 4.5 wt% of the PVA, and 6.5 wt% of the plasticizer, based on the total weight of the adhesive.

The terms "copolymerization composition" as used herein and hereafter refers to a composition that may form a composition comprising a copolymer in a polymerization reaction. Typically, the copolymerization composition comprises one or more monomers and one or more initiators, and optionally one or more catalysts.

The term "catalyst" as used herein and hereafter refers to chemical compounds and elements that increase the rate of a chemical reaction, in particular polymerization. It is to be understood that the term "catalyst" also includes the catalyst derivatives and by-products and combinations thereof originating from a method for the preparation of a hot melt adhesive as disclosed herein and hereafter, in particular originating from the polymerizing the copolymerization composition to form a first composition comprising a copolymer. "Derivatives and by-products and combinations thereof" in the context of catalyst refers to the derivatives and by-products, and combinations thereof, of the catalyst that are formed during the polymerization in a method for the preparation of a hot melt adhesive as disclosed herein and hereafter. Examples of catalysts include, but are not limited to, catalysts suitable in ring-opening polymerization (ROP), tin(II) 2-ethylhexanoate, stannous neodecanoate, bismuth carboxylate,stannous oxalate, and titanium (IV)butoxide, or derivatives and by-products thereof, or any combinations and mixtures thereof.

The terms "mass polymerization" as used herein and hereafter refers to bulk polymerization of one or more monomers in the liquid state, typically in the presence of one or more initiators and optionally one or more catalyst, in the absence of any solvent or dispersant.

In one aspect is disclosed a hot melt adhesive comprising:

- a copolymer comprising

  a repeating unit of formula (Ia)

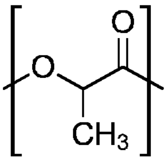 (Ia) ;

a repeating unit of formula (Ib)

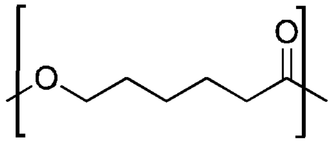 (Ib) ;

and

one or more first $C_{2-10}$-hydrocarbons each independently substituted with 2-6 substituents each independently selected from O and OH, provided that at least one of the substituents is O, wherein each O of the at least one O substituents is independently covalently attached to a repeating unit of formula (Ia) or a repeating unit of formula (Ib); and

- polyvinyl alcohol (PVA).

It is to be understood that typically the copolymer comprises several repeating units of formula (Ia) and several repeating units of formula (Ib), and further that "each O of the at least one O substituents is independently covalently attached to a repeating unit of formula (Ia) or a repeating unit of formula (Ib)" refers to that each of the one or more first $C_{2-10}$-hydrocarbons, being each independently substituted with 2-6 substituents each independently selected from O and OH, provided that at least one of the substituents is O, may be covalently attached to a repeating unit of formula (Ia) or a repeating unit of formula (Ib) of these typically several repeating units of formula (Ia) and typically several repeating units of formula (Ib) via each O substituent comprised in each of the $C_{2-10}$-hydrocarbons, or if the one or more first $C_{2-10}$-hydrocarbons comprise 2-6 substituents selected from O then each $C_{2-10}$-hydrocarbon, being substituted with 2-6 substituents selected from O, may be covalently attached to a repeating unit of formula (Ia) and/or a repeating unit of formula (Ib) of these typically several repeating units of formula (Ia) and typically several repeating units of formula (Ib) via the O comprised in each of the $C_{2-10}$-hydrocarbons. Typically each O substituent is independently covalently attached to a carbonyl carbon of the repeating unit of formula (Ia) or the repeating unit of formula (Ib). For example, when the one or more first $C_{2-10}$-hydrocarbons each independently substituted with 2-6 substituents each independently selected from O and OH, provided that at least one of the substituents is O, is 2-oxylpropoxyl, and wherein each O of the at least one O substituents is independently covalently attached to a repeating unit of formula (Ia) or a repeating unit of formula (Ib), the copolymer may have a formula including, but not limited to, formula (Ic), formula (Id), formula (Ie), and formula (If):

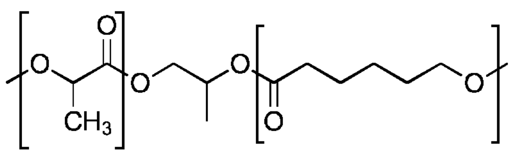 (Ic),

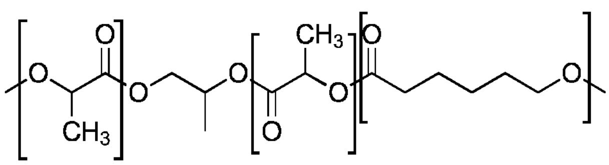 (Id),

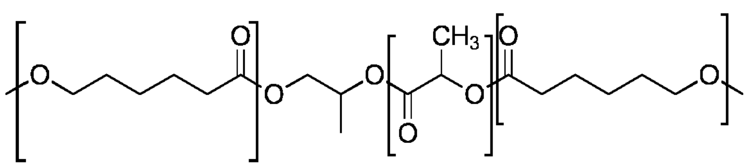 (Ie),

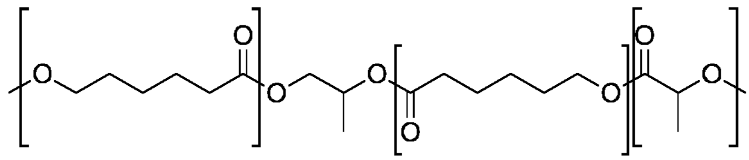

(If),

or any combination thereof.

It has now surprisingly been found that HMAs comprising copolymers as disclosed herein and hereafter are beneficial, since the copolymers of the HMAs affect advantageously the viscosity of the HMAs, have an acceptable molecular weight, are non-crystalline solids (amorphous), being beneficial properties of good HMAs. Furthermore, the copolymer is biodegradable, HMAs comprising the copolymer is biodegradable, and the copolymer provides beneficial flexibility to the HMA.

Furthermore, it has surprisingly been found that the HMAs as disclosed herein and hereafter may be free of tackifiers for the HMA to have favorable adhesion.

Furthermore, it has surprisingly been found that the copolymer and the PVA comprised in the HMA contribute to the favorable adhesion properties of the HMA, and the HMAs as disclosed herein may be free of an additional adhesion-promoting agent, such as a tackifier.

Furthermore, a HMA as disclosed herein and hereafter is beneficial, since the HMA is biodegradable, provide fast setting time, have an acceptable open time, softening point and bond strength, good flexibility, and favorable adhesion.

Additionally, or alternatively, the hot melt adhesive is free of a copolymer that is a block copolymer comprising a first block and a second block, wherein the first block is an amorphous copolymer of lactic acid and caprolactone, and the second block is a crystalline polymer of lactic acid.

Additionally, or alternatively, the hot melt adhesive is free of a tackifier, in particular a tackifier selected from the group consisting of resins, hydrogenated hydrocarbon resins, and their mixtures, terpene-phenol resins, novolacs, and a polymer consisting of amorphous lactic acid oligomer tackifier of an amorphous polymerisation product of a) lactic acid monomer and b) a multifunctional polymerization initiator containing three or more hydroxy and/or amino groups, wherein the amorphous polymerisation product of the amorphous lactic acid oligomer tackifier has a number average molecular weight (Mn) of 1000 to 10000 g/mol. Typically, tackifiers represent most of both weight percentage and cost of conventional HMAs. Therefore, HMAs as disclosed herein and hereafter being free of a tackifier is advantageous, since the cost of the HMAs as disclosed herein and hereafter, and the costs for the preparation of the HMAs as disclosed herein and hereafter, may be lower compared to conventional HMAs comprising a tackifier.

Additionally, or alternatively, the copolymer is a random copolymer, in particular a branched random copolymer.

Additionally, or alternatively, the hot melt adhesive further comprises a plasticizer, in particular the plasticizer is an ester.

Additionally, or alternatively, the plasticizer is selected from the group consisting of polymeric plasticizers, and biodegradable plasticizers, in particular biodegradable polymeric plasticizers.

Additionally, or alternatively, at least two of the substituents of the one or more first $C_{2-10}$-hydrocarbons are O, wherein each O of the at least two O substituents is independently covalently attached to a repeating unit of formula (Ia) or a repeating unit of formula (Ib), and 0-4 of the substituents are OH.

Additionally, or alternatively, at least two, at least three, at least four, at least five, or six of the substituents of the one or more first $C_{2-10}$-hydrocarbons are O, wherein each O of the at least two, at least three, at least four, at least five, or six O substituents is independently covalently attached to a repeating unit of formula (Ia) or a repeating unit of formula (Ib), and the rest of the substituents are OH. Without being bound to any theory the inventors believe that these HMAs may comprise a branched copolymer comprising the substituted one or more first $C_{2-10}$-hydrocarbons covalently attached to the repeating unit of formula (Ia) or the repeating unit of formula (Ib) that favourable lower the melting point and crystallinity, and increases the bond strength, of the HMA.

Additionally, or alternatively, the copolymer further comprises one or more second $C_{1-10}$-hydrocarbons each independently substituted with 1 substituent selected from O, wherein each O of the O substituents is covalently attached to a repeating unit of formula (Ia) or to a repeating unit of formula (Ib). It is to be understood that the second $C_{1-10}$-hydrocarbons each independently substituted with 1 substituent selected from O corresponds to $C_{1-10}$-alkoxy. These HMAs may have particularly good adhesion.

Additionally, or alternatively, the repeating unit of formula (Ia) is selected from repeating units of formula (Ia) having (*S*)-configuration and/or (*R*)-configuration. Therefore, it is to be understood that the copolymer may comprise a repeating unit of formula (Ia) having (*S*)-configuration and a repeating unit of formula (Ia) having (*R*)-configuration, or the copolymer may comprise a repeating unit of formula (Ia) having (*S*)-configuration or a repeating unit of formula (Ia) having (*R*)-configuration. A "repeating unit of formula (Ia) having (*S*)-configuration" refers to a repeating unit of formula (Ia*S*):

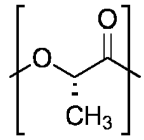

(Ia*S*),

and

a "repeating unit of formula (Ia) having (*R*)-configuration" refers to a repeating unit of formula (Ia*R*):

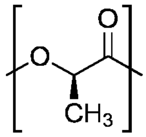

(Ia*R*).

Additionally, or alternatively, the copolymer comprises repeating units of formula (Ia), wherein the copolymer has more of a repeating unit of formula (Ia) having (*S*)-configuration than of a repeating unit of formula (Ia) having (*R*)-configuration. Without being bound to any theory the inventors believe that the copolymer may comprise more of a repeating unit of formula (Ia) having (*S*)-configuration than of a repeating unit of formula (Ia) having (*R*)-configuration if L-lactide (LLA) is used in a method as disclosed herein and hereafter, in particular in the polymerizing the copolymerization composition comprising LLA as disclosed herein and hereafter due to razemization of the copolymer or the LLA to form also repeating unit of formula (Ia) having (*R*)-configuration. Similarly, the copolymer may comprise more of a repeating unit of formula (Ia) having (*R*)-configuration than of a repeating unit of formula (Ia) having (*S*)-configuration if D-lactide (DLA) is used in a method as disclosed herein and hereafter. The degree of razemization, and therefore the ratio of (*S*)-configuration: (*R*)-configuration of the repeating unit of formula (Ia), may depend on, e.g., but not limied to, the used catalyst, the degree of enantiopurity of the lactide used, and the temperature in the method. Additionally, or alternatively, the repeating unit of formula (Ia) has essentially (*S*)-configuration.

Additionally, or alternatively, the hot melt adhesive further comprises a catalyst, in particular a catalyst suitable in ring-opening polymerization (ROP), more in particular a catalyst selected from the group consisting of tin(II) 2-ethylhexanoate, stannous neodecanoate, bismuth carboxylate, stannous oxalate, and titanium (IV)butoxide, or a derivative or byproduct thereof, or combinations thereof. It is to be understood that the catalyst, or a derivative or byproduct thereof, or combinations thereof, originates from a method for the preparation of a hot melt adhesive as disclosed herein and hereafter, in particular from the polymerizing the copolymerization composition to form a first composition comprising a copolymer.

Additionally, or alternatively, the hot melt adhesive comprises 0.001-1.0 wt% of the catalyst, in particular 0.005-1.0 wt%, more in particular 0.005-0.04 wt%, based on the total weight of the hot melt adhesive.

Additionally, or alternatively, the molecular weight of the copolymer is 15000-35000 g/mol, preferably 20000-35000 g/mol, more preferably 24000-35000 g/mol. HMAs comprising a copolymer with a molecular weight of 15000-35000 g/mol are advantageous, since the HMAs have favourable viscosity, in particular the viscosity is favorable of HMAs comprising a copolymer with a molecular weight of 20000-35000 g/mol, in particular 24000-35000 g/mol.

Additionally, or alternatively, the hot melt adhesive further comprises an antioxidant.

Additionally, or alternatively, the hot melt adhesive comprises 90-98 wt% of the copolymer, in particular 92-98 wt% of the copolymer, 1-10 wt% of the PVA, in particular 2-8 wt% of the PVA, 0-1.0 wt% of the catalyst, in particular 0.001-1.0 wt% of the catalyst, and 0-3.0 wt%, in particular 0-1.0 wt%, of the antioxidant, based on the total weight of the adhesive.

Additionally, or alternatively, the hot melt adhesive comprises 73-98 wt% of the copolymer, 1-10 wt% of the PVA, 0.1-15 wt% of the plasticizer, 0.001-1.0 wt% of the catalyst, and 0-3.0 wt% of the antioxidant, in particular 0-1.0 wt% of the antioxidant, based on the total weight of the adhesive. In particular, the hot melt adhesive comprises 83-96 wt% of the copolymer, 2-8 wt% of the PVA, 0.1-10 wt% of the plasticizer, 0.005-0.1 wt% of the catalyst, and 0.1-3.0 wt% of the antioxidant, in particular 0.1-0.8 wt% of the antioxidant, based on the total weight of the adhesive. More in particular, the hot melt adhesive consists of 85-95 wt% of the copolymer, 2-8 wt% of the PVA, 0.1-10 wt% of the plasticizer, 0.005-0.1 wt% of the catalyst, and 0.1-3.0 wt% of the antioxidant, in particular 0.1-0.8 wt% of the antioxidant, based on the total weight of the adhesive. Even more in particular, the hot melt adhesive consists of 87-95 wt% of the copolymer, 4-6 wt% of the PVA, in particular 4-5 wt% of the PVA, 0.1-8 wt% of the plasticizer, in particular 1-8 wt% of the plasticizer, 0.02-0.06 wt% of the catalyst, in particular 0.03-0.045 wt% of the catalyst, and 0.1-3.0 wt% of the antioxidant, in particular 0.1-0.8 wt% of the antioxidant, more in particular 0.3-0.6 wt% of the antioxidant, based on the total weight of the adhesive.

Additionally, or alternatively, the content of the one or more first substituted $C_{2-10}$-hydrocarbons is 0.1-1.5 wt%, in particular 0.4-1.0 wt%, and the content of the one or more second substituted $C_{1-10}$-hydrocarbons is 0-1.5 wt%, in

particular 0-1.0 wt%, based on the total weight of the copolymer. It is to be understood that the terms "first substituted $C_{2-10}$-hydrocarbons" may refer to first $C_{2-10}$-hydrocarbons each independently substituted with 2-6 substituents each independently selected from O and OH, provided that at least one of the substituents is O, and any position isomers and stereoisomers thereof (in the context of hot melt adhesives as disclosed herein and hereafter), and first $C_{2-10}$-hydrocarbons each independently substituted with 2-6 substituents each independently selected from OH, and any position isomers and stereoisomers thereof (in the context of methods for the preparation of a hot melt adhesive as disclsoed herein and hereafter), and further that the terms "second substituted $C_{1-10}$-hydrocarbons" may refer to second $C_{1-10}$-hydrocarbons each independently substituted with 1 substituent each independently selected from O, and any position isomers and stereoisomers thereof (in the context of hot melt adhesives as disclosed herein and hereafter), and second $C_{1-10}$-hydrocarbons each independently substituted with 1 substituent each independently selected from OH, and any position isomers and stereoisomers thereof (in the context of methods for the preparation of a hot melt adhesive as disclsoed herein and hereafter).

Additionally, or alternatively, the one or more first substituted $C_{2-10}$-hydrocarbons are each independently selected from the group consisting of

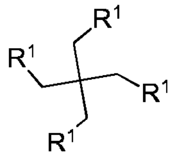 , 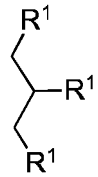 , 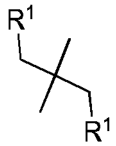 , 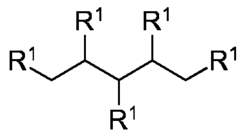 ,

and

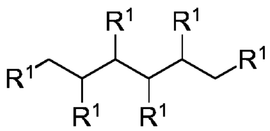 ,

in particular each independently selected from the group consisting of

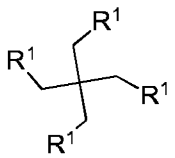 , 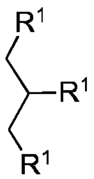 , 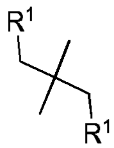 , 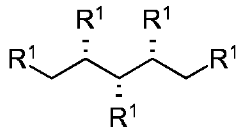 ,

and

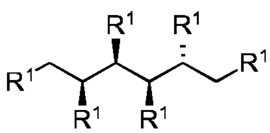 ,

wherein

each $R^1$ is independently selected from H, O, and OH, provided that at least one of $R^1$ is O and at least one of the remaining $R^1$'s is O or OH, wherein each of the O of $R^1$ is independently covalently attached to a repeating unit of formula (Ia) or a repeating unit of formula (Ib). In particular, each $R^1$ is independently selected from O and OH, provided that at least one of $R^1$ is O, wherein each of the O of $R^1$ is independently covalently attached to a repeating unit of formula (Ia) or a repeating unit of formula (Ib). Additionally, or alternatively, the copolymer may further comprise one or more second $C_{1-10}$-hydrocarbons each independently substituted with 1 substituent selected from O, wherein each O of the O substituents is covalently attached to a repeating unit of formula (Ia) or to a repeating unit of formula (Ib). These HMAs are advantageous, since the HMAs may have advantageous softening point, crystallinity, and adhesion.

Additionally, or alternatively, the one or more second substituted $C_{1-10}$-hydrocarbons are each independently selected from the group consisting of $C_{1-10}$-alkoxy, preferably *n*-octyloxy.

Additionally, or alternatively, the content of the one or more first substituted $C_{2-10}$-hydrocarbons is 0.1-1.5 wt%, in

particular 0.4-1.0 wt%, and the content of the one or more second substituted $C_{1-10}$-hydrocarbons is 0-1.5 wt%, in particular 0.1-1.0 wt%, more in particular 0.4-1.0 wt%, based on the total weight of the copolymer.

Additionally, or alternatively, the hot melt adhesive comprises 0.1-3.0 wt% of the antioxidant, in particular 0.1-1.0 wt%, more in particular 0.2-0.8 wt%, based on the total weight of the hot melt adhesive. Additionally, or alternatively, the antioxidant is selected from the group consisting of pentaerythritol tetrakis[3-[3,5-di-tert-butyl-4-hydroxyphenyl]propionate, 2',3-bis[[3-[3,5-di-tert-butyl-4-hydroxyphenyl]propionyl]]propionohydrazide, bis (2,4-di-t-butylphenyl)pentaerythritol diphosphite, and tetrakis(methylene-3-(3,5-di-tert-butyl-4-hydroxyphenyl-propionate))methane. These HMAs are advantageous, since these HMAs are less prone to degradation during storage (e.g., due to oxidation) and the antioxidant preserve the HMA at elevated temperatures, such as at the softening point of the HMAs.

Additionally, or alternatively, the hot melt adhesive comprises 0.1-10 wt% of the plasticizer, in particular 1-10 wt%, more in particular 5-10 wt%, based on the total weight of the adhesive.

Additionally, or alternatively, the plasticizer is selected from the group consisting of polyester polyols from a $C_{2-10}$-diacid, one or more $C_{2-6}$-polyols, and 0 to 3 $C_{2-10}$-alcohols; di-n-heptyl succinate, lactic acid polyesters, isosorbide diesters, and tributyl o-acetylcitrate, in particular the plasticizer is selected from the group consisting of polyester polyols from a $C_{2-10}$-diacid, one or more $C_{2-6}$-polyols, and 0 to 3 $C_{2-10}$-alcohols, wherein the $C_{2-10}$-diacid is selected from the group consisting of oxalic acid, malonic acid, succinic acid, glutaric acid, adipic acid, and pimelic acid; the one or more $C_{2-6}$-polyols are each independently selected from the group consisting of 1,2-, 1,3-, and 1,4-butanediol, 1,2-, and 1-3-propanediol, and the 0-3 $C_{2-10}$-alcohols are each independently selected from the group consisting of 1-hexanol, and 2-ethyl-1-hexanol; lactic acid polyesters, in particular Glyplast OLA 2; isosorbide diesters, in particular isosorbide dioctanoate, Polysorb ID 37, and other isosorbide diesters obtained from esterification of isosorbide with plant-based fatty acids comprising caprylic acid (octanoic acid; C8) and capric acid (decanoic acid; C10) fatty acids; and tributyl o-acetylcitrate.

Additionally, or alternatively, the plasticizer is selected from the group consisting of a polyester polyol from one $C_{2-10}$-diacid, two $C_{2-6}$-diols, and one $C_{2-10}$-alcohol; lactic acid polyesters, in particular Glyplast OLA 2; Polysorb ID 37; and tributyl o-acetylcitrate, wherein the one $C_{2-10}$-diacid is selected from the group consisting of succinic acid, glutaric acid, adipic acid, and pimelic acid; the two $C_{2-6}$-diols are each independently selected from the group consisting of 1,2-, 1,3-, and 1,4-butanediol, 1,2-, and 1-3-propanediol, and the one $C_{2-10}$-alcohol is selected from the group consisting of 1-hexanol, and 2-ethyl-1-hexanol.

Additionally, or alternatively, the plasticizer is selected from the group consisting of polyester of adipic acid with 1,3-butanediol, 1,2-propanediol and 2-ethyl-1-hexanol (CAS: 73018-26-5), di-n-heptyl succinate, lactic acid polyesters, in particular Glyplast OLA 2 (from Condensia), Polysorb ID 37, and tributyl o-acetylcitrate. These HMAs are advantageous, since the HMAs may have improved adhesion, they may be softer, more flexible, and have increased plasticity.

Additionally, or alternatively, the hot melt adhesive comprises 1-10 wt% of the PVA, in particular 3-7 wt% of the PVA, based on the total weight of the hot melt adhesive. These HMAs are advantageous, since the fiber tear, setting time, gelling, and viscosity of the HMA is favorable.

Additionally, or alternatively, the degree of hydrolysis of the PVA is 26 - 99 mol%, in particular 26 - 98 mol%, more in particular 26 - 53 mol%, even more in particular 33 - 53 mol%. These HMAs are advantageous, since the adhesion, and viscocity of the HMAs are favorable.

Additionally, or alternatively, the adhesive comprises a copolymer comprising a repeating unit of formula (Ia), a repeating unit of formula (Ib), one first substituted $C_{2-10}$-hydrocarbon, and one second substituted $C_{2-10}$-hydrocarbon; PVA; a plasticizer; an antioxidant; and a catalyst, wherein the adhesive comprises 60-90 wt% of the repeating unit of formula (Ia), 1-30 wt% of the repeating unit of formula (Ib), 0.1-1.5 wt% of the one first substituted $C_{2-10}$-hydrocarbons, 0-1.5 wt% of the one second substituted $C_{1-10}$-hydrocarbon, 1-10 wt% of the PVA, 0.5-10 wt% of the plasticizer, 0.001-0.1 wt% of the catalyst, and 0-3.0 wt% of the antioxidant, based on the total weight of the adhesive, in particular wherein the adhesive comprises 60-90 wt% of the repeating unit of formula (Ia), 1-30 wt% of the repeating unit of formula (Ib), 0.1-1.5 wt% of the one first substituted $C_{2-10}$-hydrocarbons, 0-1.5 wt% of the one second substituted $C_{1-10}$-hydrocarbon, 1-10 wt% of the PVA, 0.5-10 wt% of the plasticizer, 0.001-0.1 wt% of the catalyst, and 0-1.0 wt% of the antioxidant, based on the total weight of the adhesive.

Additionally, or alternatively, the adhesive comprises a copolymer comprising a repeating unit of formula (Ia), a repeating unit of formula (Ib), and one first substituted $C_{2-10}$-hydrocarbon; PVA; a plasticizer; an antioxidant; and a catalyst, wherein the adhesive comprises 60-90 wt% of the repeating unit of formula (Ia), 1-30 wt% of the repeating unit of formula (Ib), 0.1-1.5 wt% of the one first substituted $C_{2-10}$-hydrocarbon, 1-10 wt% of the PVA, 0.1-3.0 wt% of the antioxidant, in particular 0.1-1.0 wt% of the antioxidant, 0.5-10 wt% of the plasticizer, and 0.001-0.1 wt% of the catalyst, based on the total weight of the adhesive.

Additionally, or alternatively, the adhesive comprises a copolymer comprising a repeating unit of formula (Ia), a repeating unit of formula (Ib), one first substituted $C_{2-10}$-hydrocarbon, and one second substituted $C_{2-10}$-hydrocarbon; PVA; a plasticizer; an antioxidant; and a catalyst, wherein the adhesive comprises 60-90 wt% of the repeating unit of formula (Ia), 1-30 wt% of the repeating unit of formula (Ib), 0.1-1.5 wt% of the one first substituted $C_{2-10}$-hydrocarbon, 0-1.5

wt% of the one second substituted $C_{1-10}$-hydrocarbon, 1-10 wt% of the PVA, 0.1-3.0 wt% of the antioxidant, in particular 0.1-1.0 wt% of the antioxidant, 0.5-10 wt% of the plasticizer, and 0.001-0.1 wt% of the catalyst, based on the total weight of the adhesive.

Additionally, or alternatively, the adhesive comprises 70-85 wt% of the repeating unit of formula (Ia), 1-15 wt% of the repeating unit of formula (Ib), 0.3-1.0 wt% of the one or more first substituted $C_{2-10}$-hydrocarbons, 0.3-1.0 wt% of the one or more second substituted $C_{1-10}$-hydrocarbons, 3-7 wt% of the PVA, 0.1-3.0 wt% of the antioxidant, in particular 0.1-0.7 wt% of the antioxidant, 2-10 wt%, in particular 2-7 wt%, of the plasticizer, and 0.001-0.1 wt% of the catalyst, based on the total weight of the adhesive.

Additionally, or alternatively, the adhesive comprises 70-85 wt% of the repeating unit of formula (Ia), 5-15 wt% of the repeating unit of formula (Ib), 0.3-0.8 wt% of the one or more first substituted $C_{2-10}$-hydrocarbons each independently selected from the group consiting of 2,3-dihydroxypropoxyl, 2-hydroxy-1-(hydroxymethyl)ethoxyl, 2-hydroxy-3-oxylpropoxyl, 3-hydroxy-2-oxylpropoxyl, 2,3-dioxylpropoxyl, or any combination and mixture thereof; 0.3-0.8 wt% of the one second $C_{1-10}$-hydrocarbon selected from the group consiting of n-octyloxy; 3-7 wt% of the PVA, wherein the degree of hydrolysis of the PVA is 33 - 53 mol%; 0.3-3.0 wt% of the antioxidant, in particular 0.3-0.7 wt% of the antioxidant selected from the group consisting of pentaerythritol tetrakis[3-[3,5-di-tert-butyl-4-hydroxyphenyl]propionate, 2',3-bis[[3-[3,5-di-tert-butyl-4-hydroxyphenyl]propionyl]]propionohydrazide, bis (2,4-di-t-butylphenyl)pentaerythritol diphosphite, and tetrakis(methylene-3-(3,5-di-tert-butyl-4-hydroxyphenyl-propionate))methane; and 1-10 wt% of the plasticizer selected from the group consisting of polyester of adipic acid with 1,3-butanediol, 1,2-propanediol and 2-ethyl-1-hexanol (CAS: 73018-26-5), di-n-heptyl succinate, lactic acid polyesters, isosorbide diesters, and tributyl o-acetylcitrate; and 0.001-0.1 wt% of the catalyst selected from the group consisting of tin(II) 2-ethylhexanoate, stannous neodecanoate, bismuth carboxylate, stannous oxalate, and titanium (IV)butoxide, or derivatives or by-products thereof, or combinations thereof, based on the total weight of the adhesive.

Additionally, or alternatively, the viscosity of the adhesive is 1500-4000 mPa·s at 160 °C, in particular 1500-3000 mPa·s at 160 °C.

Additionally, or alternatively, the softening point of the adhesive is 65 - 85 °C, in particular 68 - 83 °C, more in particular 77 - 83 °C.

Additionally, or alternatively, the molecular weight of the adhesive is 10000-35000 g/mol, in particular 15000-35000 g/mol, more in particular 22000-31000 g/mol.

Additionally, or alternatively, the setting time of the adhesive is 0.5-4.0 s, in particular 0.5-3.0 s, more in particular 0.5-2.0 s.

Additionally, or alternatively, the open time of the adhesive is 1-10 s, in particular 2-10 s, more in particular 3-10 s.

Additionally, or alternatively, the hot melt adhesive is biodegradable. Additionally, or alternatively, the hot melt adhesive has a biodegradability according to the ISO 14855 standard that is at least 90%. Additionally, or alternatively, the hot melt adhesive biodegrades during maximum of 6 months at least 90% according to the ISO 14855 standard, or the hot melt adhesive biodegrades during maximum of 6 months at least 90% compared to the biodegration of microcellulose according to the ISO 14855 standard.

Additionally, or alternatively, the PVA and/or the plasticizer is non-covalently attached to the copolymer. It is to be understood that "non-covalently attached" refers herein and hereafter to that chemical compounds (such as polymers) may have non-covalent interactions (for example, but not limited to, electrostatic interactions, and van der Waals forces) to other chemical compounds but may not be covalently attached to the other chemical compounds. Therefore, the PVA and/or the plasticizer may have non-covalent interactions (for example, but not limited to, electrostatic interactions, and van der Waals forces) to the copolymer of the HMA but may not be covalently attached to the copolymer. Therefore, when the PVA and/or the plasticizer is non-covalently attached to the copolymer it is to be understood that the HMA is free of a block polymer comprising a first block and a second block, wherein the first block comprises a copolymer comprising a repeating unit of formula (Ia) and a repeating unit of formula (Ib), and the second block is PVA and/or plasticizer, or polylactic acid.

Additionally, or alternatively, the PVA is, at least partially, covalently attached to the copolymer, in particular to a repeating unit of formula (Ia) or a repeating unit of formula (Ib), and the PVA that is at least partially covalently attached to the copolymer is, at least partially, non-covalently attached to the plasticizer, in particular essentially non-covalently attached to the plasticizer.

Additionally, or alternatively, the PVA is, at least partially, covalently attached to the plastizicer, in particular to a plasticizer that is selected from the group consisting of polyester of adipic acid with 1,3-butanediol, 1,2-propanediol and 2-ethyl-1-hexanol (CAS: 73018-26-5), di-n-heptyl succinate, polyester polyol, lactic acid polyester, isosorbide diesters, and tributyl o-acetylcitrate; and the PVA that is at least partially covalently attached to the plastizicer is, at least partially, non-covalently attached to the copolymer, in particular essentially non-covalently attached to the copolymer.

Additionally, or alternatively, the HMA further comprises one or more additives.

Additionally, or alternatively, the HMA further comprises 0.1-5 wt% of one or more additives that are each independently selected from the group consisting of stabilizers, anti-blocking agents, catalyst deactivators such as alkyl

acid phosphates, pigments, colorants, and fillers, or any combination or mixture thereof, based on the total weight of the hot melt adhesive. In particular, the stabilizers are each independently selected from the group consisting of pentaerythritol tetrakis 3-(3,5-di-tert-butyl-4-hydroxyphenyl) propionate, 2-(1-(2-hydroxy-3,5-ditertiopenthylphenyl)ethyl)-4,6-ditertiopentylphenyl acrylate, pentaerythrityl tetrakis(3-laurylthiopropionate), aromatic polycarbodiimide, substituted diarylcarbodiimide, aromatic polycarbodiimide. In particular, the anti-blocking agents are each independently selected from the group consisting of ethylene bis-stearamide, ethylene bisoleamide, stearamide, oleamide, erucamide, cis-13-docosenamide, ethylene glycol monostearate, cetyl palmitate, saturated linear alcohol, carboxylic acid, polyethylene glycol, precipitated silica. In particular, the fillers are each independently selected from the group consisting of talc, carbonates, silica, kaolin, sulphates, clays. In particular, the hot melt adhesive comprises one or more additives that are each independently selected from the group consisting of stabilizers, anti-blocking agents, and catalyst deactivators such as alkyl acid phosphates, or any combination or mixture thereof. More in particular, the content of the one or more additives is 0.1-5 wt%, based on the total weight of the hot melt adhesive. Even more in particular, the hot melt adhesive comprises one stabilizer selected from the group consisting of pentaerythritol tetrakis 3-(3,5-di-tert-butyl-4-hydroxyphenyl) propionate, 2-(1-(2-hydroxy-3,5-ditertiopenthylphenyl)ethyl)-4,6-ditertiopentylphenyl acrylate, pentaerythrityl tetrakis(3-laurylthiopropionate), aromatic polycarbodiimide, substituted diarylcarbodiimide, and aromatic polycarbodiimide; and/or one catalyst deactivator selected from alkyl acid phosphates, wherein the total content of the stabilizer and/or catalyst deactivator is 0.1-5 wt%, based on the total weight of the hot melt adhesive.

Additionally, or alternatively, the HMA is in the form of granules, powder, tablets, pillows, or blocks.

Additionally, or alternatively, the HMA consists of

- 79.9-94.699 wt%, in particular 87-95 wt%, of a copolymer consisting of a repeating unit of formula (Ia); a repeating unit of formula (Ib); one first $C_{2-10}$-hydrocarbon substituted with 2-6 substituents each independently selected from O and OH, provided that at least one of the substituents is O, or any position isomers and stereoisomers thereof, wherein each O of the at least one O substituents is independently covalently attached to a repeating unit of formula (Ia) or a repeating unit of formula (Ib); and one second $C_{1-10}$-hydrocarbon substituted with 1 substituent selected from O, or any position isomers and stereoisomers thereof, wherein the O of the O substituent is covalently attached to a repeating unit of formula (Ia) or to a repeating unit of formula (Ib);
- 3-7 wt%, in particular 4-6 wt%, of polyvinyl alcohol (PVA);
- 2-10 wt%, in particular 2-8 wt%, of a plasticizer;
- 0.3-3.0 wt%, in particular 0.3-0.7 wt%, of an antioxidant; and
- 0.001-0.1 wt%, in particular 0.02-0.06 wt%, of a catalyst,

based on the total weight of the HMA, wherein the content of the repeating unit of formula (Ia) is 70-85 wt%, the content of the repeating unit of formula (Ib) is 5-15 wt%, the content of the one first substituted $C_{2-10}$-hydrocarbon is 0.3-0.8 wt%, and the content of the one second substituted $C_{1-10}$-hydrocarbon is 0.3-0.8 wt%, based on the total weight of the hot melt adhesive, in particular wherein the one first substituted $C_{2-10}$-hydrocarbon is selected from the group consisting of

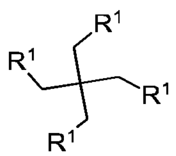
,
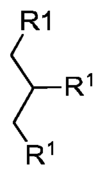
,
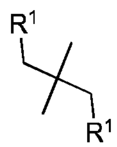
,
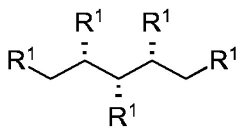
,

and

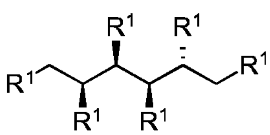
,

wherein each $R^1$ is independently selected from O, and OH, provided that at least one of $R^1$ is O, or any regioisomer thereof, wherein each of the O of $R^1$ is independently covalently attached to a repeating unit of formula (Ia) or a repeating unit of formula (Ib), more in particular the one first substituted $C_{2-10}$-hydrocarbon is selected from the group consiting of 2,3-dihydroxypropoxyl, 2-hydroxy-1-(hydroxymethyl)ethoxyl, 2-hydroxy-3-oxylpropoxyl, 3-hydroxy-2-oxylpropoxyl, 2,3-dioxylpropoxyl, or any combination and mixture thereof; the one of second substituted $C_{1-10}$-hydrocarbon is n-octyloxy; the degree of hydrolysis of the PVA is 33 - 53 mol%; the plasticizer is selected from the group consisting of polyester of adipic acid with 1,3-butanediol, 1,2-propanediol and 2-ethyl-1-hexanol (CAS: 73018-26-5), di-n-heptyl succinate, lactic acid

polyesters, isosorbide diesters, and tributyl o-acetylcitratedegree; the antioxidant is selected from the group consisting of pentaerythritol tetrakis[3-[3,5-di-*tert*-butyl-4-hydroxyphenyl]propionate, 2',3-bis[[3-[3,5-di-tert-butyl-4-hydroxyphenyl] propionyl]]propionohydrazide, bis (2,4-di-t-butylphenyl)pentaerythritol diphosphite, and tetrakis(methylene-3-(3,5-di-tert-butyl-4-hydroxyphenyl-propionate))methane; and the catalyst is selected from the group consisting of tin(II) 2-ethylhexanoate, stannous neodecanoate, bismuth carboxylate, stannous oxalate, and titanium (IV)butoxide, or derivatives or by-products, or combinations, thereof. More in particular, each of the O of $R^1$ and each of the O of *n*-octyloxy are independently covalently attached to a carbonyl carbon of a repeating unit of formula (Ia) or a repeating unit of formula (Ib).

It is to be understood that the choice of formulation of the HMA (i.e., the choice and the amount of repeating unit of formula (Ia), repeating unit of formula (Ib), one or more first substituted $C_{2-10}$-hydrocarbons, one or more second substituted $C_{1-10}$-hydrocarbons, and catalyst to form the copolymer; the choice and amount of the formed copolymer, PVA, plasticizer, antioxidant, and/or additivies) may affect properties, such as biodegradability, setting time, open time, softening point, bond strength, flexibility, viscosity, and adhesion, of the HMA. In addition, the used method for the preparation of the HMA may alter said properties. While e.g. the adhesion of the HMA is important, also other properties of the HMA, such as the open time, setting time, viscosity, and biodegradability, are important. Typically, if the formulation of the HMA is changed in order to change one or more properties of the HMA also other properties of the HMA are changed. Therefore, the HMAs as disclosed herein and hereafter are advantageous since the formulation thereof enable favorable properties of the HMAs, such as biodegradability, setting time, open time, softening point, bond strength, flexibility, viscosity, and adhesion.

In one aspect is disclosed a hot melt adhesive obtainable by a method for the preparation of a hot melt adhesive as disclosed herein and hereafter. In particular, the hot melt adhesive comprises:

- a copolymer obtainable by polymerizing a copolymerization composition comprising lactide (LA), in particular LLA, ε-caprolactone (CL), one or more first $C_{2-10}$-hydrocarbons each independently substituted with 2-6 substituents each independently selected from OH, and a catalyst; and
- polyvinyl alcohol (PVA).

Additionally, or alternatively, the hot melt adhesive further comprises an antioxidant and/or a plasticizer, in particular the hot melt adhesive further comprises an antioxidant and a plasticizer.

Additionally, or alternatively, the copolymerization composition further comprises one or more second $C_{1-10}$-hydrocarbons each independently substituted with 1 substituent selected from OH.

Additionally, or alternatively, the hot melt adhesive consists of:

- a copolymer obtainable by polymerizing a copolymerization composition consisting of LLA, CL, one first $C_{2-10}$-hydrocarbon substituted with 2-6 substituents selected from OH, one second $C_{1-10}$-hydrocarbon substituted with 1 substituent selected from OH, and a catalyst, wherein the one first substituted $C_{2-10}$-hydrocarbon is selected from the group consisting of pentaerythritol, glycerol, neopentyl glycol, xylitol, and D-sorbitol; and the one second substituted $C_{1-10}$-hydrocarbon is 1-octanol;
- the catalyst;
- polyvinyl alcohol (PVA);
- an antioxidant; and
- a plasticizer.

It is to be understood that the catalyst originates from the polymerizing the copolymerization composition and the catalyst may be the catalyst and/or one or more catalyst derivatives and/or one or more by-products of the catalyst, or combinations thereof, originating from the polymerizing the copolymerization composition.

In one aspect is disclosed a method for the preparation of a hot melt adhesive as disclosed herein and hereafter, comprising:

i) providing a copolymerization composition comprising lactide (LA), ε-caprolactone (CL), one or more first $C_{2-10}$-hydrocarbons each independently substituted with 2-6 substituents each independently selected from OH, and a catalyst;
ii) polymerizing the copolymerization composition to form a first composition comprising a copolymer;
iii) combining polyvinyl alcohol (PVA) with the first composition comprising the copolymer to form a second composition; and
iv) heating the formed second composition to form a third composition,

to form the hot melt adhesive.

It has now been surprisingly found that if instead of using PVA in the copolymerization composition that is

polymerized, post-adding PVA, i.e., combining PVA with the formed first composition comprising the copolymer to form a second composition, and heating the formed second composition comprising PVA and the first composition comprising the copolymer, the adhesion, and the viscosity of the HMAs prepared by the methods may be improved.

Additionally, or alternatively, in iii), combining PVA and an antioxidant with the first composition comprising the copolymer to form a second composition. Combining, in addition to PVA, an antioxidant with the first composition comprising the copolymer in iii) is advantageous, since the antioxidant may preserve the HMA from by-products that may form during the preparation method or reduce the degree of degradation of the HMA during and/or after the preparation method.

Additionally, or alternatively, in iii), combining PVA, an antioxidant, and a plasticizer with the first composition comprising the copolymer to form a second composition.

Additionally, or alternatively, the method further comprises

v) combining a plasticizer with the formed third composition to form a fourth composition; and
vi) heating the formed fourth composition,

to form the hot melt adhesive.

It has surprisingly been found that combining a plasticizer with the formed third composition to form a fourth composition and heating the formed fourth composition is advantageous since not only an improved plasticity of the formed HMA may be obtained but also an improved adhesion of the HMA may be obtained.

Additionally, or alternatively, the copolymerization composition of i) further comprises one or more second $C_{1-10}$-hydrocarbons each independently substituted with 1 substituent selected from OH.

The multifunctional one or more first $C_{2-10}$-hydrocarbons substituted with 2-6 substituents each independently selected from OH, and the monofunctional second $C_{1-10}$-hydrocarbons substituted with 1 substituent selected from OH may function as initiators in polymerization reaction thus enabling two or more chains of repeating units of formula (Ia) and/or repeating units of formula (Ib) to grow in close proximity. Without being bound to any theory the inventors believe that the number of chains of repeating unit of formula (Ia) and of repeating unit of formula (Ib) growing in close proximity may contribute to the amorphicity of the copolymer and/or the HMA.

Additionally, or alternatively, the temperature of the polymerizing the copolymerization composition is 150-200 °C, preferably 170-190 °C, more preferably 180 °C, for 2-6 hours, in particular 3-6 hours, more in particular 3.5-6 hours. A person skilled in the art understands that depending on e.g., the amount of the copolymerization composition, the reaction apparatus used in the polymerization, and the type of mixing of the copolymerization composition the temperature and time may be varied to affect e.g., the yield and composition of the first composition comprising a copolymer, in particular the yield and composition of the copolymer in the first composition, and properties, such as adhesion, open time, and setting time, of the formed HMA.

Additionally, or alternatively, the temperature of the heating the formed second composition is 150-200 °C, preferably 170-190 °C, more preferably 180 °C, for 10-60 minutes, preferably 20-40 minutes, more preferably 30 minutes.

Additionally, or alternatively, the temperature of the heating the formed fourth composition is 150-200 °C, preferably 170-190 °C, more preferably 180 °C, for 10-20 minutes, preferably 15 minutes.

Additionally, or alternatively, the LA is L-lactide (LLA). Using LLA in a method as disclosed herein and hereafter is advantageous, since the yield of the copolymer of the first composition may be higher than the yield of a copolymer when using D-lactide.

Additionally, or alternatively, the polymerizing the copolymerization composition is a mass polymerization.

Additionally, or alternatively, the molecular weight of the copolymer is 15000-35000 g/mol, preferably 20000-35000 g/mol, more preferably 24000-35000 g/mol.

Additionally, or alternatively, in i), providing a copolymerization composition comprising lactide (LA), ε-caprolactone (CL), one or more first $C_{2-10}$-hydrocarbons each independently substituted with 2-6 substituents each independently selected from OH, one or more second $C_{1-10}$-hydrocarbons each independently substituted with 1 substituent selected from OH, and a catalyst, wherein the LA is L-lactide (LLA), the one or more first substituted $C_{2-10}$-hydrocarbons are each independently selected from the group consisting of pentaerythritol, glycerol, neopentyl glycol, xylitol, and D-sorbitol, the one or more second substituted $C_{1-10}$-hydrocarbons are each independently selected from the group consisting of 1-octanol, and the catalyst is selected from the group consisting of tin(II) 2-ethylhexanoate, stannous neodecanoate, bismuth carboxylate, stannous oxalate, and titanium (IV)butoxide.

Additionally, or alternatively, in i), providing a copolymerization composition comprising lactide (LA), ε-caprolactone (CL), one first $C_{2-10}$-hydrocarbon substituted with 2-6 substituents selected from OH, one second $C_{1-10}$-hydrocarbon substituted with 1 substituent selected from OH, and a catalyst, wherein the one first substituted $C_{2-10}$-hydrocarbon is selected from the group consisting of pentaerythritol, glycerol, neopentyl glycol, xylitol, and D-sorbitol, and the one second substituted $C_{1-10}$-hydrocarbon is selected from the group consisting of 1-octanol.

Additionally, or alternatively, in iii), combining PVA and an antioxidant with the first composition comprising the

copolymer to form a second composition.

Additionally, or alternatively, the antioxidant is selected from the group consisting of pentaerythritol tetrakis [3-[3,5-di-tert-butyl-4-hydroxyphenyl]propionate, 2',3-bis[[3-[3,5-di-tert-butyl-4-hydroxyphenyl]propionyl]]propionohydrazide, bis (2,4-di-t-butylphenyl)pentaerythritol diphosphite, and tetrakis(methylene-3-(3,5-di-tert-butyl-4-hydroxyphenyl-propionate))methane.

Additionally, or alternatively, the wt% of the antioxidant is 0-3.3, based on the total weight of the second composition.

Additionally, or alternatively, in v), combining a plasticizer with the formed third composition to form a fourth composition, wherein the wt% of the plasticizer is 0.1-10 wt%, in particular 1-10 wt%, more in particular 5-10 wt%, based on the total weight of the fourth composition.

Additionally, or alternatively, the plasticizer is selected from the group consisting of polyester polyols from a $C_{2-10}$-diacid, one or more $C_{2-6}$-polyols, and 0 to 3 $C_{2-10}$-alcohols, in particular the $C_{2-10}$-diacid is selected from the group consisting of oxalic acid, malonic acid, succinic acid, glutaric acid, adipic acid, and pimelic acid; the one or more $C_{2-6}$-polyols are each independently selected from the group consisting of 1,2-, 1,3-, and 1,4-butanediol, 1,2-, and 1-3-propanediol; and the 0-3 $C_{2-10}$-alcohols are each independently selected from the group consisting of 1-hexanol, and 2-ethyl-1-hexanol; lactic acid polyesters, in particular Glyplast OLA 2; isosorbide diesters, in particular isosorbide dioctanoate, Polysorb ID 37, and other isosorbide diesters obtained from esterification of isosorbide with plant-based fatty acids comprising caprylic acid (octanoic acid; C8) and capric acid (decanoic acid; C10) fatty acids; and tributyl o-acetylcitrate.

Additionally, or alternatively, the plasticizer is selected from the group consisting of a polyester polyol from one $C_{2-10}$-diacid, two $C_{2-6}$-diols, and one $C_{2-10}$-alcohol; lactic acid polyesters, in particular Glyplast OLA 2; Polysorb ID 37; and tributyl o-acetylcitrate, wherein the one $C_{2-10}$-diacid is selected from the group consisting of succinic acid, glutaric acid, adipic acid, and pimelic acid; the two $C_{2-6}$-diols are each independently selected from the group consisting of 1,2-, 1,3-, and 1,4-butanediol, 1,2-, and 1-3-propanediol, and the one $C_{2-10}$-alcohol is selected from the group consisting of 1-hexanol, and 2-ethyl-1-hexanol.

Additionally, or alternatively, the plasticizer is selected from the group consisting of poly-di(2-ethylhexyl) glycoladipate (CAS: 73018-26-5), di-n-heptyl succinate, lactic acid polyesters, isosorbide diester, and tributyl o-acetylcitrate.

Additionally, or alternatively, the degree of hydrolysis of the PVA is 26 - 99 mol%, in particular 26 - 98 mol%, more in particular 26 - 53 mol%, even more in particular 33 - 53 mol%.

Additionally, or alternatively, in i), providing a copolymerization composition comprising LLA, ε-caprolactone (CL), one or more first $C_{2-10}$-hydrocarbons each independently substituted with 2-6 substituents each independently selected from OH, optionally one or more second $C_{1-10}$-hydrocarbons each independently substituted with 1 substituent selected from OH, and a catalyst, wherein the wt% of LLA is 63.8-98.8, the wt% of CL is 1.1-33.3, the wt% of the one or more first substituted $C_{2-10}$-hydrocarbons is 0.10-1.67, the wt% of the one or more second substituted $C_{1-10}$-hydrocarbons is 0-1.67 wt%, and the wt% of the catalyst is 0.001-1.111, based on the total weight of the copolymerization composition. In particular, in i), the copolymerization composition comprises LLA, CL, one or more first $C_{2-10}$-hydrocarbons each independently substituted with 2-6 substituents each independently selected from OH, a catalyst, and one or more second $C_{1-10}$-hydrocarbons each independently substituted with 1 substituent selected from OH, wherein the wt% of LLA is 63.8-98.8, the wt% of CL is 1.1-33.3, the wt% of the one or more first substituted $C_{2-10}$-hydrocarbons is 0.10-1.67, the wt% of the one or more second substituted $C_{1-10}$-hydrocarbons is 0.10-1.67, and the wt% of the catalyst is 0.001-1.111, based on the total weight of the copolymerization composition.

Additionally, or alternatively, in i), LA is LLA, the wt% of LLA is 63.8-98.8, the wt% of CL is 1.1-33.3, the wt% of the one or more first substituted $C_{2-10}$-hydrocarbons is 0.10-1.67, the wt% of the one or more second substituted $C_{1-10}$-hydrocarbons is 0-1.67, and the wt% of the catalyst is 0.001-1.111, based on the total weight of the copolymerization composition; and, in iii), the wt% of PVA is 1-11.1, and the wt% of the antioxidant is 0-3.3, in particular 0-1.0, based on the total weight of the second composition.

Additionally, or alternatively, in i), providing a copolymerization composition comprising LLA, ε-caprolactone (CL), one or more first $C_{2-10}$-hydrocarbons each independently substituted with 2-6 substituents each independently selected from OH, optionally one or more second $C_{1-10}$-hydrocarbons each independently substituted with 1 substituent selected from OH, and a catalyst, wherein the wt% of LLA is 63.8-98.8, the wt% of CL is 1.1-33.3, the wt% of the one or more first substituted $C_{2-10}$-hydrocarbons is 0.10-1.67, the wt% of the one or more second substituted $C_{1-10}$-hydrocarbons is 0-1.67 wt%, and the wt% of the catalyst is 0.001-1.111, based on the total weight of the copolymerization composition; in iii), the wt% of PVA is 1-11.1, and the wt% of the antioxidant is 0-3.3, in particular 0-1.0, based on the total weight of the second composition; and if v) present, in v), the wt% of the plasticizer is 1-10, based on the total weight of the fourth composition.

Additionally, or alternatively, in i), the wt% of LA or LLA is 80.4-98.2, the wt% of CL is 1.1-17.5, the wt% of the one or more first substituted $C_{2-10}$-hydrocarbons is 0.32-1.22, the wt% of the one or more second substituted $C_{1-10}$-hydrocarbons is 0.32-1.22 wt%, and the wt% of the catalyst is 0.001-1.22, based on the total weight of the copolymerization

composition; in iii), the wt% of PVA is 3.1-7.8, and the wt% of the antioxidant is 0.1-3.3, in particular 0.1-0.78, based on the total weight of the second composition; and, in v), the wt% of the plasticizer is 2-10, based on the total weight of the fourth composition.

Additionally, or alternatively, in i), the LA is LLA, the wt% of LLA is 80.4-98.2, the wt% of CL is 5.4-17.5, the wt% of the one or more first substituted $C_{2-10}$-hydrocarbons is 0.35-1.05, the wt% of the one or more second substituted $C_{1-10}$-hydrocarbons is 0.35-1.05 wt%, and the wt% of the catalyst is 0.001-0.122, based on the total weight of the copolymerization composition; in iii), the wt% of PVA is 3.03-7.78, and the wt% of the antioxidant is 0.3-3.3, in particular 0.3-0.78, based on the total weight of the second composition; and, in v), the wt% of the plasticizer is 1-10, based on the total weight of the fourth composition.

Additionally, or alternatively, in i), providing a copolymerization composition comprising lactide (LA), ε-caprolactone (CL), one first $C_{2-10}$-hydrocarbon substituted with 2-6 substituents selected from OH, one second $C_{1-10}$-hydrocarbon substituted with 1 substituent selected from OH, and a catalyst, wherein the LA is LLA, the one first substituted $C_{2-10}$-hydrocarbon is selected from the group consisting of of pentaerythritol, glycerol, neopentyl glycol, xylitol, and D-sorbitol, the one second second substituted $C_{1-10}$-hydrocarbon is 1-octanol, and the catalyst is selected from the group consisting of tin(II) 2-ethylhexanoate, stannous neodecanoate, bismuth carboxylate, stannous oxalate, and titanium (IV) butoxide, wherein the LA is LLA and the wt% of the LLA is 80.4-98.2, the wt% of CL is 5.4-17.5, the wt% of one first $C_{2-10}$-hydrocarbon is 0.35-1.05, the wt% of the one second $C_{1-10}$-hydrocarbon is 0.35-1.05 wt%, and the wt% of the catalyst is 0.001-0.122, based on the total weight of the copolymerization composition; in iii), the wt% of PVA is 3.03-7.78, and the wt% of the antioxidant is 0.3-3.3, in particular 0.3-0.78, based on the total weight of the second composition, wherein the degree of hydrolysis of the PVA is 33 - 53 mol%, and the antioxidant is selected from the group consisting of pentaerythritol tetrakis[3-[3,5-di-tert-butyl-4-hydroxyphenyl]propionate, 2',3-bis[[3-[3,5-di-tert-butyl-4-hydroxyphenyl]propionyl]]propionohydrazide, bis (2,4-di-t-butylphenyl)pentaerythritol diphosphite, and tetrakis(methylene-3-(3,5-di-tert-butyl-4-hydroxyphenyl-propionate))methane; and, in v), the wt% of the plasticizer is 1-10, based on the total weight of the fourth composition, wherein the plasticizer is selected from the group consisting of polyester of adipic acid with 1,3-butanediol, 1,2-propanediol and 2-ethyl-1-hexanol (CAS: 73018-26-5), di-n-heptyl succinate, lactic acid polyesters, isosorbide diesters, and tributyl o-acetylcitrate.

Additionally, or alternatively, in i), providing a copolymerization composition consisting of LLA, ε-caprolactone (CL), one first $C_{2-10}$-hydrocarbon substituted with 2-6 substituents selected from OH, one second $C_{1-10}$-hydrocarbon substituted with 1 substituent selected from OH, and a catalyst, wherein the one first substituted $C_{2-10}$-hydrocarbon is selected from the group consisting of of pentaerythritol, glycerol, neopentyl glycol, xylitol, and D-sorbitol, the one second substituted $C_{1-10}$-hydrocarbon is 1-octanol, and the catalyst is selected from the group consisting of tin(II) 2-ethylhexanoate, stannous neodecanoate, bismuth carboxylate, stannous oxalate, and titanium (IV)butoxide, wherein the wt% of LLA is 80.4-98.2, in particular 80-90, more in particular 83-87, even more in particular 84.5-85.5, the wt% of CL is 5.4-17.5, in particular 10-16, more in particular 13.5-14.5, the wt% of the one first substituted $C_{2-10}$-hydrocarbons is 0.35-1.05, in particular 0.35-0.65, even more in particular 0.45-0.55, the wt% of the one second substituted $C_{1-10}$-hydrocarbons is 0.35-1.05 wt%, in particular 0.35-0.65, even more in particular 0.45-0.55, and the wt% of the catalyst is 0.001-0.122, in particular 0.005-0.045, more in particular 0.01-0.04, based on the total weight of the copolymerization composition; in iii), the wt% of PVA is 3.03-7.78, in particular 4-7, more in particular 4-5, and the wt% of the antioxidant is 0.3-3.3, in particular 0.3-0.78, more in particular 0.4-0.5, based on the total weight of the second composition, wherein the degree of hydrolysis of the PVA is 33 - 53 mol%, and the antioxidant is selected from the group consisting of pentaerythritol tetrakis[3-[3,5-di-tert-butyl-4-hydroxyphenyl]propionate, 2',3-bis[[3-[3,5-di-tert-butyl-4-hydroxyphenyl]propionyl]]propionohydrazide, bis (2,4-di-t-butylphenyl)pentaerythritol diphosphite, and tetrakis(methylene-3-(3,5-di-tert-butyl-4-hydroxyphenyl-propionate))methane; and, in v), the wt% of the plasticizer is 1-10, in particular 1-8, more in particular 2-7, based on the total weight of the fourth composition, wherein the plasticizer is selected from the group consisting of polyester of adipic acid with 1,3-butanediol, 1,2-propanediol and 2-ethyl-1-hexanol (CAS: 73018-26-5), di-n-heptyl succinate, lactic acid polyesters, isosorbide diesters, and tributyl o-acetylcitrate.

Additionally, or alternatively, the ii) polymerizing the copolymerization composition is perfomed with stirring the copolymerization composition.

Alternatively, or additionally, the method further comprises after, before, and/or during the i), ii), iii), iv), v), and/or vi), adding one or more additives to the copolymerization composition, the first composition, the second composition, the third composition, the fourth composition, and/or the hot melt adhesive.

Alternatively, or additionally, the method further comprises after, before, and/or during the i), ii), iii), iv), v), and/or vi), adding one or more additives that are each independently selected from the group consisting of stabilizers, anti-blocking agents, catalyst deactivators such as alkyl acid phosphates, pigments, colorants, and fillers, or any combination or mixture thereof, to the copolymerization composition, the first composition, the second composition, the third composition, the fourth composition, and/or the hot melt adhesive, in particular after the vi), adding one or more additives that are each independently selected from the group consisting of stabilizers, anti-blocking agents, and catalyst deactivators such as alkyl acid phosphates, or any combination or mixture thereof, to the hot melt adhesive. In particular,

the stabilizers are each independently selected from the group consisting of pentaerythritol tetrakis 3-(3,5-di-tert-butyl-4-hydroxyphenyl) propionate, 2-(1-(2-hydroxy-3,5-ditertiopenthylphenyl)ethyl)-4,6-ditertiopentylphenyl acrylate, pentaerythrityl tetrakis(3-laurylthiopropionate), aromatic polycarbodiimide, substituted diarylcarbodiimide, aromatic polycarbodiimide. In particular, the anti-blocking agents are each independently selected from the group consisting of ethylene bis-stearamide, ethylene bis-oleamide, stearamide, oleamide, erucamide, cis-13-docosenamide, ethylene glycol monostearate, cetyl palmitate, saturated linear alcohol, carboxylic acid, polyethylene glycol, precipitated silica. In particular, the fillers are each independently selected from the group consisting of talc, carbonates, silica, kaolin, sulphates, clays. More in particular, the one or more additives is added to a content of 0.1-5 wt%, based on the total weight of the copolymerization composition, the first composition, the second composition, the third composition, the fourth composition, or the hot melt adhesive. Even more in particular, one stabilizer selected from the group consisting of pentaerythritol tetrakis 3-(3,5-di-tert-butyl-4-hydroxyphenyl) propionate, 2-(1-(2-hydroxy-3,5-ditertiopenthylphenyl)ethyl)-4,6-ditertiopentylphenyl acrylate, pentaerythrityl tetrakis(3-laurylthiopropionate), aromatic polycarbodiimide, substituted diarylcarbodiimide, and aromatic polycarbodiimide; and/or one catalyst deactivator selected from alkyl acid phosphates is added after the vi) to the hot melt adhesive to a content of 0.1-5 wt% based on the total weight of the hot melt adhesive.

Additionally, or alternatively, the method further comprises forming the hot melt adhesive to granules, powder, tablets, pillows, or blocks.

Methods for the preparation of a hot melt adhesive as disclosed herein and herafter enables the preparation of a hot melt adhesive which is biodegradable.

In another aspect is disclosed use of a copolymer as disclosed herein and hereafter in a hot melt adhesive. Additionally, or alternatively, the hot melt adhesive is as disclosed herein and hereafter.

The term "substrate" as used herein and hereafter refers to materials and compositions that HMAs as disclosed herein and hereafter may be used for binding or arranging the substrates in a fixed position with respect to each other. Examples of substrates include, but are not limited to, paper, paper with a layer of a coating material, layers of laminates, cardboards, in particular corrugated boards; hygiene products, in particular diapers and sanitary napkins; veneer, textiles, plastics, in particular plastics, such as PLA, used in packaging of food, liquids, items, chemicals, and drugs; nonwoven material, metal foils, and wood.

In another aspect is disclosed a use of a hot melt adhesive as disclosed herein and herefater for binding substrates together. In particular, disclosed is a method for arranging substrates in a fixed position with respect to each other, comprising 1) applying an amount of a hot melt adhesive as disclosed herein and herefater in liquid or solid form onto a surface of a first substrate, 2) applying a surface of a second substrate onto the amount of hot melt adhesive, and 3) cooling the assembly of substrates and hot melt adhesive to a temperature below the softening point of the hot melt adhesive, provided that if the hot melt adhesive in 1) is in solid form then the hot melt adhesive and/or the surface(s) of the first and/or the second substrate is/are heated to a temperature of or above the softening point of the hot melt adhesive before, during, and/or after the 2) applying the surface of the second substrate onto the amount of hot melt adhesive. Alternatively, or additionally, the 1) applying of the adhesive in liquid form is extruding, rolling, or spraying.

Alternatively, or additionally, the first substrate and the second substrate are each independently a porous, permeable, and/or nonporous substrate.

Alternatively, or additionally, the first substrate and the second substrate are each independently selected from the group consisting of paper, paper with a layer of a coating material, in particular a polymeric coating material; layers of laminates; cardboards, in particular corrugated boards; hygiene products, in particular diapers and sanitary napkins; veneer, textiles, plastics, in particular plastics, such as PLA, used in packaging of food, liquids, items, chemicals, and drugs; nonwoven material, metal foils, and wood. It is to be understood that the first and the second substrate may be the same substrate, i.e., the hot melt adhesive is used to bond a first surface of a substrate and a second surface of the substrate together.

In another aspect is disclosed a use of a hot melt adhesive as disclosed herein and hereafter for preparing packaging, laminating applications, nonwoven applications, disposable products, hygiene products, PLA film, forming cardboard products, binding, coating paper, cardboard, closures, textiles, nonwoven products, or plastics.

In another aspect is disclosed an item comprising a hot melt adhesive as disclosed herein and hereafter. In particular, the item is selected from the group consisting of a packaging for food, liquids, items, chemicals, or drugs; closures, cardboard, paper, wood, vaneer; binding, coating on paper, cardboard, or plastics; book, hygiene products, in particular diapers and sanitary napkins; textiles, and nonwoven material. Due to the biodegradability of the HMA as disclosed herein and herefater the recycling of items and products comprising the HMA reduce costs and impact on nature, as the amount of non-biodegradable, i.e., non-environmentally friendly, waste is reduced.

## EXAMPLES

Reference will now be made in detail to various embodiments. The following specific nonlimiting examples will further identify the HMAs as disclosed herein and hereafter.

The description below discloses some embodiments in such a detail that a person skilled in the art is able to utilize the embodiments based on the disclosure. Not all steps or features of the embodiments are discussed in detail, as many of the steps or features will be obvious for the person skilled in the art based on this specification.

**EXAMPLE 1: General method for the preparation of biodegradable hot melt adhesive**

Preparation of the biodegradable hot melt adhesive typically involves three steps. In a first step, a first composition comprising a copolymer that may be a branched amorphous poly(lactide-co-ε-caprolactone)-copolymer (PLCL-copolymer) is prepared by mass polymerization of a copolymerization composition. Before this polymerization step, the reactor should preferably be thoroughly cleaned and dried for example *in vacuo.* The monomers (LA (LLA), CL), the one or more initiators (one or more first substituted $C_{2-10}$-hydrocarbons, and optionally one or more second substituted $C_{1-10}$-hydrocarbons), and the catalyst of the copolymerization composition (the wt%s disclosed in the examples below are based on the total weight of the copolymerization composition) are charged into the reactor and mixing of the copolymerization composition is started. Polymerization of the copolymerization composition is performed at 150-200 °C under nitrogen gas. The reaction time of the polymerization is 3-6 h. Viscosity of the molten (i.e., the first composition comprising a copolymer) is measured during and after the polymerization (viscosities given in the examples below are measured after the polymerization). The target viscosity of the molten first composition comprising the copolymer is 1500-6000 mPa·s/160 °C and the molecular weight (Mw) is about 15000-35000 g/mol. A first composition comprising a copolymer is formed, which is used in the next step typically without purification and as still molten.

In a second step, to the (typically still molten) first composition comprising the copolymer is added PVA (polyvinyl alcohol) and optionally an antioxidant to form a second composition (the wt%s disclosed in the examples below are based on the total weight of the second composition). Heating of the formed second composition comprising the copolymer, PVA, and the optional antioxidant is continued at 150-200 °C for 10-60 min. A hot melt adhesive (if no plasticizer is to be added) or a third composition is formed that are typically not purified. If a plasticizer is to be added to the third composition, the third composition is used in the next step typically without purification and as still molten.

In an optional third step, a plasticizer is added to the third composition forming a fourth composition and heating of the fourth composition at 150-180 °C is continued until the formed hot melt adhesive mixture is homogeneous, typically heated 10-20 min, to form a hot melt adhesive (the wt%s disclosed in Table 3 below are based on the total weight of the fourth composition/ the formed hot melt adhesive).

**EXAMPLE 2: Method for the preparation of a first composition comprising a copolymer using a copolymerization composition comprising LLA, CL, diol, and a catalyst**

General method of example 1 was followed: a copolymerization composition consisting of monomers L-lactide (LLA, 94.78 wt%), and ε-caprolactone (CL, 4.74 wt%), and as initiator neopentyl glycol (0.47 wt%) was polymerized as described in the first step of example 1 by using tin(II) 2-ethylhexanoate (0.01 wt%) as a catalyst. The reaction time of the polymerization was 3.75 h and the polymerization temperature 200 °C. The viscosity of the first composition comprising the copolymer is 20290 mPa·s/ 160 °C.

**EXAMPLE 3: Method for the preparation of a first composition comprising a copolymer using a copolymerization composition comprising LLA, CL, triol, and a catalyst**

General method of example 1 was followed: a copolymerization composition consisting of monomers LLA (94.78 wt%), and CL (4.74 wt%), and as inititator glycerol (0.47 wt%) was polymerized as described in the first step of example 1 by using tin(II) 2-ethylhexanoate (0.01 wt%) as a catalyst. The reaction time of the polymerization was 3.75 h and the polymerization temperature 200 °C. The viscosity of the first composition comprising the copolymer is 5062 mPa·s/ 160°C, and Tg is 43 °C.

**EXAMPLE 4: Method for the preparation of a first composition comprising a copolymer using a copolymerization composition comprising LLA, CL, triol, and a catalyst**

General method of example 1 was followed: a copolymerization composition consisting of monomers LLA (89.54 wt%), and CL (9.95 wt%), and as initiator glycerol (0.5 wt%) was polymerized as described in the first step of example 1 by using tin(II) 2-ethylhexanoate (0.01 wt%) as a catalyst. The reaction time of the polymerization was 3.75 h and the polymerization temperature 200 °C. The viscosity of the first composition comprising the copolymer is 6085 mPa·s/ 160°C, and Tg is 34 °C.

**EXAMPLE 5: Method for the preparation of a first composition comprising a copolymer using a copolymerization composition comprising LLA, CL, triol, diol, and a catalyst**

General method of example 1 was followed: a copolymerization composition consisting of monomers LLA (84.90 wt%), and CL (13.98 wt%), and as initiators glycerol (0.54 wt%), and n-octanol (0.54 wt%) was polymerized as described in the first step of example 1 by using tin(II) 2-ethylhexanoate (0.04 wt%) as a catalyst. The reaction time of the polymerization was 4.5 h and the polymerization temperature 180 °C. The viscosity of the first composition comprising the copolymer is 2600 mPa·s/ 160°C, Tg is 28 °C, and Mw is 30500.

**EXAMPLE 6: Method for the preparation of a first composition comprising a copolymer using a copolymerization composition comprising LLA, CL, tetrol, and a catalyst**

General method of example 1 was followed: a copolymerization composition consisting of monomoers LLA (85.24 wt%), and CL (13.97 wt%), and as initiator pentaerytritol (0.75 wt%) was polymerized as described in the first step of example 1 by using tin(II) 2-ethylhexanoate (0.04 wt%) as a catalyst. The reaction time of the polymerization was 4 h and the polymerization temperature 180 °C. The viscosity of the first composition comprising the copolymer is 2600 mPa·s/ 160°C, Tg is 28°C, and Mw is 29000.

**EXAMPLE 7: Method for the preparation of a third composition using a formed second composition comprising a copolymer, PVA, and an antioxidant**

General method of example 1 was followed: a copolymerization composition consisting of monomers LLA (85.24 wt%), and CL (13.97 wt%), and as initiator pentaerythritol (0.75 wt%) was polymerized as described in the first step of example 1 by using tin(II) 2-ethylhexanoate (0.04 wt%) as a catalyst to form the first composition comprising the copolymer, the heating time of the first step was 4.0 h and the temperature 180 °C. In the second step (as described in example 1), during the first composition comprising the copolymer being still molten, PVA (PVA LM-30 from Kuraray Poval, 4.72 wt%, degree of hydrolysis 45.0-51.0 mol%) and as antioxidant pentaerythritol tetrakis(3-(3,5-di-tert-butyl-4-hydroxyphenyl)propionate (0.47 wt%) are added to the first composition (94.81 wt%) comprising the copolymer. The heating time of the second step was 30 min and the temperature 180 °C. The viscosity of the hot melt adhesive (third composition) is 2990 mPa·s/ 160°C.

**EXAMPLE 8: Method for the preparation of a third composition using a formed second composition comprising a copolymer, and PVA**

General method of example 1 was followed: a copolymerization composition consisting of monomers LLA (84.99 wt%), and CL (14.00 wt%), and as initiators glycerol (0.50 wt%), and n-octanol (0.50 wt%) was polymerized as described in the first step of example 1 by using tin(II) 2-ethylhexanoate (0.01 wt%) as a catalyst to form the first composition comprising the copolymer, the heating time of the first step was 4.0 h and the temperature 180 °C. In the second step (as described in example 1), during the first composition comprising the copolymer being still molten, PVA (PVA LM-20 from Kuraray Poval, 2.43 wt%, degree of hydrolysis 38.0-42.0 mol%) is added to the first composition (97.57 wt%) comprising the copolymer. The heating time of the second step was 0.5 h and the temperature 180 °C. The viscosity of the hot melt adhesive (third composition) is 2820 mPa·s/ 160°C.

**EXAMPLE 9: Method for the preparation of a third composition using a formed second composition comprising a copolymer, and PVA**

General method of example 1 was followed: a copolymerization composition consisting of monomers LLA (84.99 wt%), and CL (14.00 wt%), and as initiators glycerol (0.50 wt%), and n-octanol (0.50 wt%) was polymerized as described in the first step of example 1 by using tin(II) 2-ethylhexanoate (0.01 wt%) as a catalyst to form the first composition comprising the copolymer, the heating time of the first step was 4.0 h and the temperature 180 °C. In the second step (as described in example 1), during the first composition comprising the copolymer being still molten, PVA (PVA LM-20, Kuraray Poval, 6.96 wt%, degree of hydrolysis 38.0-42.0 mol%) is added to the first composition (93.04 wt%) comprising the copolymer. The heating time of the second step was 0.5 h and the temperature 180 °C. The viscosity of the hot melt adhesive (third composition) is 2500 mPa·s/ 160°C.

**EXAMPLE 10: Method for the preparation of a third composition using a formed second composition comprising a copolymer, PVA, and an antioxidant**

General method of example 1 was followed: a copolymerization composition consisting of monomers LLA (84.90 wt%), CL (13.98 wt%), and as initiators glycerol (0.54 wt%), and n-octanol (0.54 wt%) was polymerized as described in the first step of example 1 by using tin(II) 2-ethylhexanoate (0.04 wt%) as a catalyst to form the first composition comprising the copolymer, the heating time of the first step was 4.0 h and the temperature 180 °C. In the second step (as described in example 1), during the first composition comprising the copolymer being still molten, PVA (PVA LM-30, from Kuraray Poval, 4.72 wt%, degree of hydrolysis 45.0-51.0 mol%) and antioxidant pentaerythritol tetrakis(3-(3,5-di-tert-butyl-4-hydroxyphenyl)propionate (0.47 wt%) are added to the first composition (94.81 wt%) comprising the copolymer. The heating time of the second step was 0.5 h and the temperature 180 °C. The viscosity of the hot melt adhesive (third composition) is 2700 mPa·s/ 160°C.

**EXAMPLE 11: Method for the preparation of a third composition using a formed second composition comprising a copolymer, PVA, and an antioxidant**

General method of example 1 was followed: a copolymerization composition consisting of monomers LLA (84.99 wt%), and CL (14.00 wt%), and as initiators glycerol (0.54 wt%), and n-octanol (0.54 wt%) was polymerized as described in the first step of example 1 by using tin(II) 2-ethylhexanoate (0.01 wt%) as a catalyst to form the first composition comprising the copolymer, the heating time of the first step was 4.0 h and the temperature 180 °C. In the second step, during the first composition comprising the copolymer being still molten, PVA (PVA LM-20, from Kuraray Poval, 4.74 wt%, degree of hydrolysis 38.0-42.0 mol%) and antioxidant pentaerythritol tetrakis(3-(3,5-di-tert-butyl-4-hydroxyphenyl)propionate (0.47 wt%) are added to the first composition (94.79 wt%) comprising the copolymer. The heating time of the second step was 0.5 h and the temperature 180 °C. The viscosity of the hot melt adhesive (third composition) is 3600 mPa·s/ 160°C.

**Table 1. Hot melt adhesive properties of compositions of Examples 7-11**

| | Composition (the numbers corresponding to the Examples as disclosed herein) | | | | |
|---|---|---|---|---|---|
| | 7 | 8 | 9 | 10 | 11 |
| Fiber tear, adhesion to cardboard[1] | 3 | 3 | 2 | 3 | 3 |
| Setting time (s) | 2 | 3-5 | 2-4 | 2 | 2-3 |
| Gelling test at 170 °C[2] | 2 | 1 | 1 | 2 | 1 |
| Viscosity (mPa·s/ 160 °C) | 2990 | 2820 | 2500 | 2700 | 3600 |

[1]Fiber tear means: 0 = no fiber tear when glued test pieces are torn apart; 1 = 10 to 49% of fiber tear when glued test pieces are torn; 2 = 50 to 80% of fiber tear when glued test pieces are torn apart; 3 = good fiber tear (81 to 100% fiber tear when glued test pieces are torn apart). [2]Gelling test: 0 = begins to gel in 1 day; 1 = begins to gel in 3 days; 2 = begins to gel in 7 days; 3 = begins to gel in 14 days.

**EXAMPLES 12-20: Method for the preparation of a hot melt adhesives using various amounts of a third composition and various amounts of a plasticizer**

The third step of general method of example 1 was followed to prepare hot melt adhesives using various amounts of a third composition and various amounts of a plasticizer as presented in Table 2. The heating time of the third step was 15 min and the temperature 180 °C.

Table 2. Preparation of hot melt adhesives using various amounts of a third composition and various amounts of a plasticizer.

| Example number of hot melt adhesives | Third composition (wt%)[1] | Plasticizer (wt%)[2] | Viscosity (mPa·s/ 160 °C) |
|---|---|---|---|
| 12 | 10 (98) | Glyplast OLA 2 (2) | 2194 |
| 13 | 10 (95) | Glyplast OLA 2 (5) | 1767 |
| 14 | 10 (98) | Glyplast 206/5 NL (2) | 2058 |

(continued)

| Example number of hot melt adhesives | Third composition (wt%)[1] | Plasticizer (wt%)[2] | Viscosity (mPa·s/ 160 °C) |
|---|---|---|---|
| 15 | 10 (95) | Glyplast 206/5 NL (5) | 1619 |
| 16 | 10 (93.5) | Glyplast 206/5 NL (6.5) | 1864 |
| 17 | 10 (100) | - | 2700 |
| 18 | 10 (90) | Glyplast 206/5 NL (10) | 2100 |
| 19 | 7 (100) | - | 2990 |
| 20 | 7 (95) | Glyplast 206/5 NL (5) | 2576 |
| [1]The number refers to the Example number of the third composition as disclosed herein and hereafter, and the number in the parenthesis refers to the wt% thereof (based on the total weight of the fourth composition/ the hot melt adhesive (comprising the third composition and optionally a plasticizer)). [2]The used plasticizer, and the number in the parenthesis refers to the wt% thereof (based on the total weight of the fourth composition/ the hot melt adhesive (comprising the third composition and optionally a plasticizer)). | | | |

**Evaluation of hot melt adhesives, first compositions comprising a copolymer, and third compositions**

Properties of hot melt adhesives, first compositions comprising a copolymer, second compositions, and third compositions were measured as follows.

*Viscosity*

Viscosity is measured by MCR 302; 160 °C, PP50, 1001/s, 1.2 mm. Results are disclosed in the exemples, and Tables 1 and 2 as disclosed herein.

*Molar mass measurements*

Molar mass measurements are determined by size exclusion chromatography (SEC) in chloroform eluent using polystyrene calibration. Results are disclosed in the exemples disclosed herein.

*Glass transition temperature (Tg)*

Glass transition temperature (Tg) was determined by differential scanning calorimeter model DSC2 (DSC) using a heating-cooling-heating cycle starting at -50 °C heating at 10 °C/min up to 200 °C. Results are disclosed in the exemples disclosed herein.

*Setting time*

Setting time is measured by Olinger. In measurements using Olinger, used substrate (material) is 120 g/$m^2$ wrapping paper (6.0×5.0)$cm^2$ by Walki. Open time is 0.5 s. Amount of used hot melt adhesive is 0.06 g/4 cm stripe. The setting time is reported as measured compression time until the strength of 25N is reached. Results of examples 7-11 are disclosed in Table 1. Results of examples 12-20 are disclosed in Table 3.

*Open time*

Open time is measured by Olinger. Used substrate (material) is 120 g/$m^2$ wrapping paper (6.0×5.0)$cm^2$ by Walki. Pressing time is 5 s. Amount of used hot melt adhesive is 0.06 g/4 cm stripe. The open time is measured by changing the open time so that the maximum open time at which the hot melt adhesive still binds at selected pressing time is reached. The open time is given as seconds. Results of examples 12-20 are disclosed in Table 3.

*Softening point*

Softening point is measured according to DIN 52011 method by R&B equipment and it is the temperature at which a metal ball of known weight falls through a hot melt adhesive tablet in a horizontal metal ring. Results of examples 12-20

are disclosed in Table 3.

*Fiber tear*

Fiber tear is tested at operating temperature. Manually small amount of molten hot melt adhesive is applied to the surface of corrugated board. Another piece of corrugated board is pressed on top of the applied molten adhesive. The pressing time is 1-2 s. The glued test pieces are torn open manually after 1 h and 24 h. Results of examples 7-11 are disclosed in Table 1. Results of examples 12-20 are disclosed in Table 3.

*Gelling test*

Gelling of hot melt adhesives were measured by using approximately 200 g of hot melt adhesive that is weighted into a metal jar. The lid of the metal jar is placed lightly on top of the jar, the jar is placed in the oven and heated at 170 °C. The adhesive is kept in the oven until the adhesive gels or for the maximum of four weeks. Results of examples 7-11 are disclosed in Table 1.

*Shear adhesion failure temperature*

Shear adhesion failure temperature (SAFT) is measured by a Shear tester. 0.06 g of hot melt adhesive is applied by Olinger on 120g/m$^2$ wrapping paper (6.0× 5.0)cm$^2$ by Walki. Open time is 2 s and pressing time 5 s. Shear tester is placed in the oven. The test pieces are hanged at the Shear tester and weights (200 g in total) are placed. The temperature of the oven is raised every few hours until the adhesive joint gives up and the weight drops. The result is recorded as the temperature at which the adhesive joint still lasts. Results of examples 12-20 are disclosed in Table 3.

*Flexibility*

A 200 μm film of a hot melt adhesive or a third composition is applied on silicone paper. The film is bended after 1h. The flexibility of the film is evaluated by bending the film. Results of examples 12-20 are disclosed in Table 3.

*Biodegradability*

The biodegradability of hot melt adhesives and first compositions comprising a copolymer as disclosed herein were determined under industrial and controlled composting conditions according to the method specified by the ISO 14855 standard. The test is performed at 58 °C in aerobic conditions. Test requirements for ISO 14855 include standard testing for a minimum of 90 days and then the biodegradation results are determined after an analysis of evolved $CO_2$. After a maximum test duration of 6 months, biodegradation of the test material (being the hot melt adhesive) must exceed 90% in absolute terms or, alternatively, 90% compared to the reference material, which is microcellulose, in order to fill the requirement of the ISO 14855 standard. According to biodegradability tests, unplasticized and plasticized hot melt adhesives (i.e., HMAs comprising or being free of a plasticizer), and first compositions comprising a copolymer as disclosed herein fulfill the requirement of biodegradability according to ISO 14855 standard.

Table 3. Properties of hot melt adhesives of Examples 12-20 as disclosed in Table 2.

| | Hot melt adhesive (the numbers corresponding to the Examples as disclosed in Table 2) | | | | | | | | |
|---|---|---|---|---|---|---|---|---|---|
| | 12 | 13 | 14 | 15 | 16 | 17 | 18 | 19 | 20 |
| Flexibil- | 1 | 1 | 1 | 1 | 2 | 0 | 2 | 0 | 2 |
| ity[1] | | | | | | | | | |
| Fiber tear, adhesion to cardboard[2] | 3 | 3 | 3 | 3 | 3 | 3 | 3 | 3 | 3 |
| Setting time (s) | 1.5 | 1.6 | 1.5 | 1.4 | 1.2 | 1 | 3 | 1.3 | 1.3 |
| Softening point (°C) | 81 | 79 | 82 | 80 | 77 | 83 | 68 | 83 | 78 |
| Open time (s) | 3-4 | 3-4 | 3-4 | 3-4 | 4-5 | 2-3 | 6-7 | 2-3 | 2-3 |

(continued)

| | Hot melt adhesive (the numbers corresponding to the Examples as disclosed in Table 2) | | | | | | | | |
|---|---|---|---|---|---|---|---|---|---|
| | 12 | 13 | 14 | 15 | 16 | 17 | 18 | 19 | 20 |
| SAFT (°C)[3] | 40 | 35 | 45 | 40 | 40 | 50 | 20 | 52 | 48 |
| Flexibility means: 0 = not flexible, fracture in bending; 1 = difficult to bend, but does not break in bending; 2 = flexible, flexible in bending. [2]Fiber tear means: 0 = no fiber tear when glued test pieces are torn apart; 1 = 10 to 49% of fiber tear when glued test pieces are torn; 2 = 50 to 80% of fiber tear when glued test pieces are torn apart; 3 = good fiber tear (81 to 100% fiber tear when glued test pieces are torn apart). [3]SAFT means shear adhesion failure temperature. | | | | | | | | | |

It is obvious to a person skilled in the art that with the advancement of technology, the inventive concept can be implemented in various ways. The invention and its embodiments are thus not limited to the examples described above; instead, they may vary within the scope of the claims.

The embodiments described hereinbefore may be used in any combination with each other. Several of the embodiments may be combined together to form a further embodiment. A product, a system, a method, or a use, disclosed herein, may comprise at least one of the embodiments described hereinbefore. It will be understood that the benefits and advantages described above may relate to one embodiment or may relate to several embodiments. The embodiments are not limited to those that solve any or all of the stated problems or those that have any or all of the stated benefits and advantages.

## Claims

**1.** A hot melt adhesive comprising:

- a copolymer comprising

a repeating unit of formula (Ia)

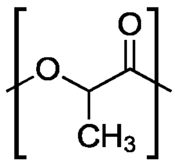

(Ia) ;

a repeating unit of formula (Ib)

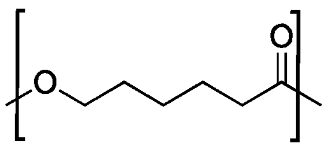

(Ib) ;

and

one or more first $C_{2-10}$-hydrocarbons each independently substituted with 2-6 substituents each independently selected from O and OH, provided that at least one of the substituents is O, wherein each O of the at least one O substituents is independently covalently attached to a repeating unit of formula (Ia) or a repeating unit of formula (Ib); and

- polyvinyl alcohol (PVA).

**2.** The hot melt adhesive as claimed in claim 1, wherein the melt adhesive further comprises a plasticizer.

**3.** The hot melt adhesive as claimed in any of the preceeding claims, wherein at least two of the substituents of the one or

more first $C_{2-10}$-hydrocarbons are O, wherein each O of the at least two O substituents is independently covalently attached to a repeating unit of formula (Ia) or a repeating unit of formula (Ib), and 0-4 of the substituents are OH.

**4.** The hot melt adhesive as claimed in any of the preceeding claims, wherein the copolymer further comprises one or more second $C_{1-10}$-hydrocarbons each independently substituted with 1 substituent selected from O, wherein each O of the O substituents is covalently attached to a repeating unit of formula (Ia) or to a repeating unit of formula (Ib).

**5.** The hot melt adhesive as claimed in any of the preceeding claims, wherein the one or more first substituted $C_{2-10}$-hydrocarbons are each independently selected from the group consisting of

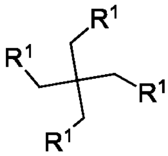 , 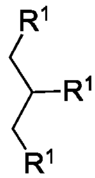 , 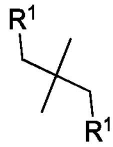 , 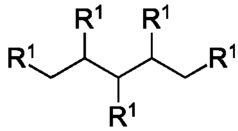 ,

and

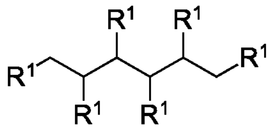 ,

wherein
each $R^1$ is independently selected from H, O, and OH, provided that at least one of $R^1$ is O and at least one of the remaining $R^1$'s is O or OH, wherein each of the O of $R^1$ is independently covalently attached to a repeating unit of formula (Ia) or a repeating unit of formula (Ib).

**6.** The hot melt adhesive as claimed in any of the preceeding claims, wherein the plasticizer is selected from the group consisting of polyester polyols from a $C_{2-10}$-diacid, one or more $C_{2-6}$-polyols, and 0 to 3 $C_{2-10}$-alcohols; di-n-heptyl succinate, lactic acid polyesters, isosorbide diesters, and tributyl o-acetylcitrate.

**7.** The hot melt adhesive as claimed in any of the preceeding claims, wherein the degree of hydrolysis of the PVA is 26 - 53 mol%.

**8.** The hot melt adhesive as claimed in any of the preceeding claims, wherein the adhesive comprises a copolymer comprising a repeating unit of formula (Ia), a repeating unit of formula (Ib), one first substituted $C_{2-10}$-hydrocarbon, and one second substituted $C_{2-10}$-hydrocarbon; PVA; a plasticizer; an antioxidant; and a catalyst, wherein the adhesive comprises 60-90 wt% of the repeating unit of formula (Ia), 1-30 wt% of the repeating unit of formula (Ib), 0.1-1.5 wt% of the one first substituted $C_{2-10}$-hydrocarbon, 0-1.5 wt% of the one second substituted $C_{1-10}$-hydrocarbon, 1-10 wt% of the PVA, 0-1.0 wt% of the antioxidant, and 0.5-10 wt% of the plasticizer, and 0.001-0.1 wt% of the catalyst, based on the total weight of the adhesive.

**9.** The hot melt adhesive as claimed in any of the preceeding claims, wherein the viscosity of the adhesive is 1500-4000 mPa·s at 160 °C, measured as indicated in the specification.

**10.** The hot melt adhesive as claimed in any of the preceeding claims, wherein the softening point of the adhesive is 65 - 85 °C, measured as indicated in the specification.

**11.** The hot melt adhesive as claimed in any of the preceeding claims, wherein the setting time of the adhesive is 0.5-4.0, measured as indicated in the specification.

**12.** The hot melt adhesive as claimed in any of the preceeding claims, wherein the open time of the adhesive is 1-10, measured as indicated in the specification.

**13.** A method for the preparation of a hot melt adhesive as defined in any of the preceeding claims, comprising:

i) providing a copolymerization composition comprising lactide (LA), ε-caprolactone (CL), one or more first $C_{2-10}$-hydrocarbons each independently substituted with 2-6 substituents each independently selected from OH, and a catalyst;
ii) polymerizing the copolymerization composition to form a first composition comprising a copolymer;
iii) combining polyvinyl alcohol (PVA) with the first composition comprising the copolymer to form a second composition; and
iv) heating the formed second composition to form a third composition,

to form the hot melt adhesive.

**14.** The method as claimed in claim 13, wherein the method further comprises

v) combining a plasticizer with the formed third composition to form a fourth composition; and
vi) heating the formed fourth composition,

to form the hot melt adhesive.

**15.** The method as claimed in any of claims 13-14, wherein the copolymerization composition of i) further comprises one or more second $C_{1-10}$-hydrocarbons each independently substituted with 1 substituent selected from OH.

**16.** The method as claimed in any of claims 13-15, wherein the degree of hydrolysis of the PVA is 26 - 53 mol%.

**17.** Use of a hot melt adhesive as defined in any of claims 1-12 for binding substrates together, or for preparing packaging, laminating applications, nonwoven applications, disposable products, hygiene products, PLA film, forming cardboard products, binding, coating paper, cardboard, closures, textiles, nonwoven products, or plastics.

## Patentansprüche

**1.** Heißschmelzklebstoff, umfassend:

- ein Copolymer, umfassend

eine Wiederholungseinheit von Formel (Ia)

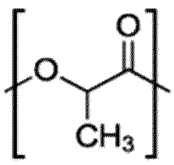
(Ia);

eine Wiederholungseinheit von Formel (Ib)

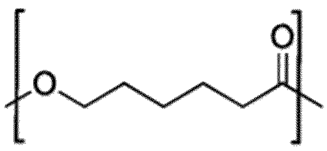
(Ib);

und
einen oder mehrere erste $C_{2-10}$-Kohlenwasserstoffe, die jeweils unabhängig voneinander mit 2-6 Substituenten substituiert sind, die jeweils unabhängig voneinander aus O und OH ausgewählt sind, vorausgesetzt, dass mindestens einer der Substituenten O ist, wobei jedes O der mindestens einen O-Substituenten unabhängig voneinander kovalent an eine Wiederholungseinheit von Formel (Ia) oder eine Wiederholungseinheit von Formel (Ib) gebunden ist; und

- Polyvinylalkohol (PVA).

**2.** Heißschmelzklebstoff nach Anspruch 1, wobei der Schmelzklebstoff ferner einen Weichmacher umfasst.

**3.** Heißschmelzklebstoff nach einem der vorstehenden Ansprüche, wobei mindestens zwei der Substituenten des einen oder der mehreren ersten $C_{2-10}$-Kohlenwasserstoffe O sind, wobei jedes O der mindestens zwei O-Substituenten unabhängig kovalent an eine Wiederholungseinheit von Formel (Ia) oder eine Wiederholungseinheit von Formel (Ib) gebunden ist und 0-4 der Substituenten OH sind.

**4.** Heißschmelzklebstoff nach einem der vorstehenden Ansprüche, wobei das Copolymer weiter einen oder mehrere zweite $C_{1-10}$-Kohlenwasserstoffe umfasst, die jeweils unabhängig voneinander mit 1 Substituenten substituiert sind, der aus O ausgewählt ist, wobei jedes O der O-Substituenten kovalent an eine Wiederholungseinheit von Formel (Ia) oder an eine Wiederholungseinheit von Formel (Ib) gebunden ist.

**5.** Heißschmelzklebstoff nach einem der vorstehenden Ansprüche, wobei der eine oder die ersten substituierten $C_{2-10}$-Kohlenwasserstoffe jeweils unabhängig voneinander ausgewählt sind aus der Gruppe, bestehend aus

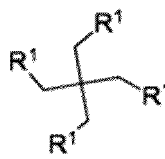 , 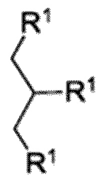 , 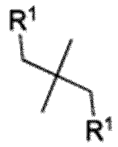 , 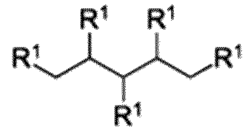 ,

und

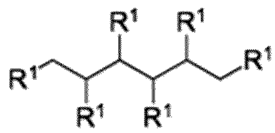 ,

wobei
jedes $R^1$ unabhängig voneinander aus H, O und OH ausgewählt ist, vorausgesetzt, dass mindestens eines von $R^1$ O ist und mindestens eines der verbleibenden $R^{1'}$O oder OH ist, wobei jedes der O von $R^1$ unabhängig kovalent an eine Wiederholungseinheit von Formel (Ia) oder eine Wiederholungseinheit von Formel (Ib) gebunden ist.

**6.** Heißschmelzklebstoff nach einem der vorstehenden Ansprüche, wobei der Weichmacher ausgewählt ist aus der Gruppe, bestehend aus Polyesterpolyolen aus einer $C_{2-10}$-Disäure, einem oder mehreren $C_{2-6}$-Polyolen und 0 bis 3 $C_{2-10}$-Alkoholen; Di-n-heptylsuccinat, Milchsäurepolyestern, Isosorbiddistern und Tributyl-o-acetylcitrat.

**7.** Heißschmelzklebstoff nach einem der vorstehenden Ansprüche, wobei der Hydrolysegrad des PVA 26-53 Mol-% beträgt.

**8.** Heißschmelzklebstoff nach einem der vorstehenden Ansprüche, wobei der Klebstoff ein Copolymer umfasst, umfassend eine Wiederholungseinheit von Formel (Ia), eine Wiederholungseinheit von Formel (Ib), einen ersten substituierten $C_{2-10}$-Kohlenwasserstoff und einen zweiten substituierten $C_{2-10}$-Kohlenwasserstoff; PVA; einen Weichmacher; ein Antioxidationsmittel; und einen Katalysator, wobei der Klebstoff 60-90 Gew.-% der Wiederholungseinheit von Formel (Ia), 1-30 Gew.-% der Wiederholungseinheit von Formel (Ib), 0,1-1,5 Gew.-% des einen ersten substituierten $C_{2-10}$-Kohlenwasserstoffs, 0-1,5 Gew.-% des einen zweiten substituierten $C_{1-10}$-Kohlenwasserstoffs, 1-10 Gew.-% des PVA, 0-1,0 Gew.-% des Antioxidationsmittels und 0,5-10 Gew.-% des Weichmachers und 0,001-0,1 Gew.-% des Katalysators, bezogen auf das Gesamtgewicht des Klebstoffs, umfasst.

**9.** Heißschmelzklebstoff nach einem der vorstehenden Ansprüche, wobei die Viskosität des Klebstoffs 1500-4000 mPa · s bei 160 °C beträgt, gemessen wie in der Spezifikation angegeben.

**10.** Heißschmelzklebstoff nach einem der vorstehenden Ansprüche, wobei der Erweichungspunkt des Klebstoffs 65-85 °C beträgt, gemessen wie in der Spezifikation angegeben.

**11.** Heißschmelzklebstoff nach einem der vorstehenden Ansprüche, wobei die Abbindezeit des Klebstoffs 0,5-4,0 s beträgt, gemessen wie in der Spezifikation angegeben.

**12.** Heißschmelzklebstoff nach einem der vorstehenden Ansprüche, wobei die offene Zeit des Klebstoffs 1-10 s beträgt, gemessen wie in der Spezifikation angegeben.

**13.** Verfahren zur Herstellung eines Heißschmelzklebstoffs, wie in einem der vorstehenden Ansprüche definiert, umfassend:

i) Bereitstellen einer Copolymerisationszusammensetzung, umfassend Lactid (La), ε-Caprolacton (CL), einen oder mehrere erste $C_{2-10}$-Kohlenwasserstoffe, die jeweils unabhängig voneinander mit 2-6 Substituenten substituiert sind, die jeweils unabhängig voneinander aus OH ausgewählt sind, und einen Katalysator;
ii) Polymerisieren der Copolymerisationszusammensetzung, um eine erste Zusammensetzung zu bilden, die ein Copolymer umfasst;
iii) Kombinieren von Polyvinylalkohol (PVA) mit der ersten Zusammensetzung, die das Copolymer umfasst, um eine zweite Zusammensetzung zu bilden; und
iv) Erwärmen der gebildeten zweiten Zusammensetzung, um eine dritte Zusammensetzung zu bilden, um den Heißschmelzklebstoff zu bilden.

**14.** Verfahren nach Anspruch 13, wobei das Verfahren weiter umfasst:

v) Kombinieren eines Weichmachers mit der gebildeten dritten Zusammensetzung, um eine vierte Zusammensetzung zu bilden; und
vi) Erwärmen der gebildeten vierten Zusammensetzung, um den Heißschmelzklebstoff zu bilden.

**15.** Verfahren nach einem der Ansprüche 13-14, wobei die Copolymerisationszusammensetzung aus i) weiter einen oder mehrere zweite $C_{1-10}$-Kohlenwasserstoffe umfasst, die jeweils unabhängig voneinander mit 1 Substituenten substituiert sind, der aus OH ausgewählt ist.

**16.** Verfahren nach einem der Ansprüche 13-15, wobei der Hydrolysegrad des PVA 26-53 Mol-% beträgt.

**17.** Verwendung eines Heißschmelzklebstoffs, wie in einem der Ansprüche 1-12 definiert, zum Verbinden von Substraten oder zur Herstellung von Verpackungen, Laminieranwendungen, Vliesanwendungen, Einwegprodukten, Hygieneprodukten, PLA-Folie, zur Bildung von Kartonprodukten, zum Binden, Beschichten von Papier, Karton, Verschlüssen, Textilien, Vliesprodukten oder Kunststoffen.

## Revendications

**1.** Adhésif thermofusible comprenant :

- un copolymère comprenant

un motif de répétition de formule (Ia)

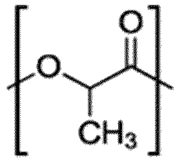 (Ia) ;

un motif de répétition de formule (Ib)

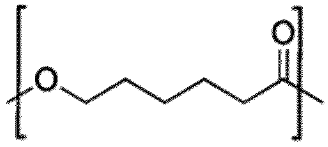 (Ib) ;

et

un ou plusieurs premiers hydrocarbures en $C_{2-10}$, chacun indépendamment substitué par 2-6 substituants choisis indépendamment parmi O et OH, à condition qu'au moins l'un des substituants soit O, dans lequel chaque O du au moins un substituant O est indépendamment lié de manière covalente à un motif de répétition de formule (Ia) ou à un motif de répétition de formule (Ib) ; et

- de l'alcool polyvinylique (PVA).

2. Adhésif thermofusible selon la revendication 1, dans lequel l'adhésif thermofusible comprend en outre un plastifiant.

3. Adhésif thermofusible selon l'une quelconque des revendications précédentes, dans lequel au moins deux des substituants des un ou plusieurs premiers hydrocarbures en $C_{2-10}$ sont O, dans lequel chaque O des au moins deux substituants O est indépendamment lié de manière covalente à un motif de répétition de formule (Ia) ou à un motif de répétition de formule (Ib), et 0-4 des substituants sont OH.

4. Adhésif thermofusible selon l'une quelconque des revendications précédentes, dans lequel le copolymère comprend en outre un ou plusieurs seconds hydrocarbures en $C_{1-10}$ chacun indépendamment substitué par 1 substituant choisi parmi O, dans lequel chaque O des substituants O est lié de manière covalente à un motif de répétition de formule (Ia) ou à un motif de répétition de formule (Ib).

5. Adhésif thermofusible selon l'une quelconque des revendications précédentes, dans lequel les un ou plusieurs premiers hydrocarbures en $C_{2-10}$ substitués sont chacun indépendamment choisis dans le groupe consistant en

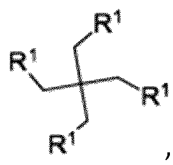 , 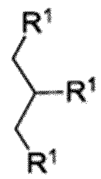 , 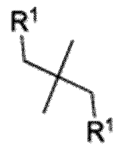 , 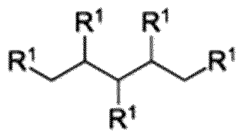 ,

et

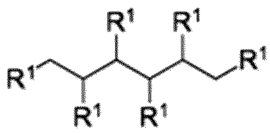 ,

dans lequel

chaque $R^1$ est indépendamment choisi parmi H, O et OH, à condition qu'au moins l'un des $R^1$ soit O et qu'au moins l'un des $R^{1'}$ restants soit O ou OH, dans lequel chacun des O de $R^1$ est indépendamment lié de manière covalente à un motif de répétition de formule (Ia) ou à un motif de répétition de formule (Ib).

6. Adhésif thermofusible selon l'une quelconque des revendications précédentes, dans lequel le plastifiant est choisi dans le groupe consistant en des polyols de polyester parmi un diacide en $C_{2-10}$, un ou plusieurs polyols en $C_{2-6}$, et 0 à 3 alcools en $C_{2-10}$ ; le succinate de di-n-heptyle, les polyesters d'acide lactique, les diesters d'isosorbide et le o-acétylcitrate de tributyle.

7. Adhésif thermofusible selon l'une quelconque des revendications précédentes, dans lequel le degré d'hydrolyse du PVA est de 26-53 % en moles.

**8.** Adhésif thermofusible selon l'une quelconque des revendications précédentes, dans lequel l'adhésif comprend un copolymère comprenant un motif de répétition de formule (Ia), un motif de répétition de formule (Ib), un premier hydrocarbure en $C_{2-10}$ substitué et un second hydrocarbure en $C_{2-10}$ substitué ; du PVA ; un plastifiant ; un antioxydant ; et un catalyseur, dans lequel l'adhésif comprend 60-90 % en poids du motif de répétition de formule (Ia), 1-30 % en poids du motif de répétition de formule (Ib), 0,1-1,5 % en poids du premier hydrocarbure en $C_{2-10}$ substitué, 0-1,5 % en poids du second hydrocarbure en $C_{1-10}$ substitué, 1-10 % en poids du PVA, 0-1,0 % en poids de l'antioxydant, et 0,5-10 % en poids du plastifiant, et 0,001-0,1 % en poids du catalyseur, sur la base du poids total de l'adhésif.

**9.** Adhésif thermofusible selon l'une quelconque des revendications précédentes, dans lequel la viscosité de l'adhésif est de 1 500-4 000 mPa.s à 160 °C, mesurée comme indiqué dans la description.

**10.** Adhésif thermofusible selon l'une quelconque des revendications précédentes, dans lequel le point de ramollissement de l'adhésif est de 65-85 °C, mesuré comme indiqué dans la description.

**11.** Adhésif thermofusible selon l'une quelconque des revendications précédentes, dans lequel le temps de prise de l'adhésif est de 0,5-4,0 s, mesuré comme indiqué dans la description.

**12.** Adhésif thermofusible selon l'une quelconque des revendications précédentes, dans lequel le temps ouvert de l'adhésif est de 1-10 s, mesuré comme indiqué dans la spécification.

**13.** Procédé pour la préparation d'un adhésif thermofusible tel que défini dans l'une quelconque des revendications précédentes, comprenant :

i) la fourniture d'une composition de copolymérisation comprenant du lactide (LA), de l'ε-caprolactone (CL), un ou plusieurs premiers hydrocarbures en $C_{2-10}$ chacun indépendamment substitué par 2-6 substituants chacun indépendamment choisis parmi OH, et un catalyseur ;
ii) la polymérisation de la composition de copolymérisation pour former une première composition comprenant un copolymère ;
iii) la combinaison d'alcool polyvinylique (PVA) avec la première composition comprenant le copolymère pour former une deuxième composition ; et
iv) le chauffage de la deuxième composition formée pour former une troisième composition, pour former l'adhésif thermofusible.

**14.** Procédé selon la revendication 13, dans lequel le procédé comprend en outre

v) la combinaison d'un plastifiant avec la troisième composition formée pour former une quatrième composition ; et
vi) le chauffage de la quatrième composition formée, pour former l'adhésif thermofusible.

**15.** Procédé selon l'une quelconque des revendications 13-14, dans lequel la composition de copolymérisation de i) comprend en outre un ou plusieurs seconds hydrocarbures en $C_{1-10}$, chacun indépendamment substitué par 1 substituant choisi parmi OH.

**16.** Procédé selon l'une quelconque des revendications 13-15, dans lequel le degré d'hydrolyse du PVA est de 26-53 % en moles.

**17.** Utilisation d'un adhésif thermofusible tel que défini dans l'une quelconque des revendications 1-12 pour lier des substrats ensemble, ou pour préparer des emballages, des applications de stratification, des applications non tissées, des produits jetables, des produits d'hygiène, des films PLA, des produits en carton de formage, des reliures, du papier de revêtement, du carton, des fermetures, des textiles, des produits non tissés ou des plastiques.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3214106 B1
- US 2017081572 A1

### Non-patent literature cited in the description

- *CHEMICAL ABSTRACTS*, 25038-75-9
- *CHEMICAL ABSTRACTS*, 4511-42-6
- *CHEMICAL ABSTRACTS*, 13076-19-2
- *CHEMICAL ABSTRACTS*, 25213-24-5
- *CHEMICAL ABSTRACTS*, 73018-26-5